# EUROPÄISCHE PATENTSCHRIFT

(11) **EP 3 527 641 B1**
(45) Veröffentlichungstag und Bekanntmachung des Hinweises auf die Patenterteilung: **06.04.2022**
(21) Anmeldenummer: 18197846.1
(22) Anmeldetag: 01.10.2018
(51) Int. Cl.: C09J 7/35, C09J 7/21, G01N 19/04, B32B 5/02, B32B 7/12, B32B 5/26

(54) **KLEBEFILM SOWIE ANORDNUNG UND VERFAHREN ZUR ÜBERPRÜFUNG EINER KLEBEANBINDUNG**
ADHESIVE FILM AND ARRANGEMENT AND METHOD FOR VERIFYING AN ADHESIVE CONNECTION
FILM ADHÉSIF AINSI QUE DISPOSITIF ET PROCÉDÉ DE VÉRIFICATION D'UN RACCORDEMENT ADHÉSIF

(30) Priorität: 05.10.2017 DE 102017217726
(43) Veröffentlichungstag der Anmeldung: 21.08.2019
(73) Patentinhaber: Premium AEROTEC GmbH, 86179 Augsburg (DE)
(72) Erfinder: KUNTZ, Julian, 86179 Augsburg (DE); BUERKNER, Steffen, 80339 Muenchen (DE); ANGELOV, Andrey, 86175 Augsburg (DE)
(74) Vertreter: LKGLOBAL Lorenz & Kopf PartG mbB Patentanwälte

(56) Entgegenhaltungen:
- WO-A2-2007/101199
- DE-A1-102011 008 191
- JP-A- 2009 063 363
- JP-U- S62 123 551
- US-A- 6 026 680

## Beschreibung

Die Erfindung bezieht sich auf einen Klebefilm für eine strukturelle Klebeverbindung sowie auf eine Anordnung und auf Verfahren zur Überprüfung einer Klebeanbindung.

Obwohl auf beliebige Klebeverbindungen anwendbar, werden die Erfindung sowie die ihr zugrunde liegende Problematik nachfolgend in Bezug auf eine geplante Klebebaugruppe sowie eine Reparatur oder Nacharbeit mittels Klebung erläutert.

Bei der Herstellung von Klebeverbindungen ist es häufig wünschenswert zu prüfen, ob die fertige Klebeverbindung eine hinreichende Qualität aufweist, mit anderen Worten, zu prüfen, wie gut der eine Klebepartner auf dem anderen hält.

Zur Überprüfung von Klebebaugruppen, die gemäß einer Bauunterlage hergestellt werden und somit eine geplante Klebeverbindung beinhalten, ist der Anmelderin ein Verfahren zur Prüfung der Qualität der fertiggestellten Klebeverbindung bekannt, bei dem ein so genannter Schältest an einer separat gefertigten Probe durchgeführt wird. Das herkömmliche Verfahren erfordert die Herstellung gesonderter Probestücke, die dann in einem Prüflabor mittels mechanischer Prüfmaschinen und unter Nutzung zum Beispiel von Kraftmessdosen getestet werden. Dieses Vorgehen ist mit einem erheblichen Aufwand an Zeit und Kosten verbunden. Das Testergebnis kann oftmals zudem erst mit zeitlicher Verzögerung vorliegen. Es wäre wünschenswert, diesen Zustand zu verbessern.

Ferner wäre es für die Prüfung von Klebeverbindungen im Zuge von Reparaturarbeiten, bei denen zum Beispiel ein neues Materialstück auf ein bereits im Gebrauch befindliches und etwa aufgrund von Beschädigung reparaturbedürftiges Bauteil aufgeklebt wird, wünschenswert, über eine Prüfmöglichkeit zu verfügen, die zuverlässig und schnell darüber Auskunft gibt, ob die Klebeverbindung die geforderte Qualität aufweist. Auch für Fälle von Nacharbeiten, die mit Hilfe von Klebverbindungen ausgeführt werden, wäre eine zuverlässige und zeitsparende Überprüfungsmöglichkeit wünschenswert.

DE 10 2011 008 191 A1 beschreibt ein doppelseitiges Haftklebesystem mit einem Trägermaterial mit einer Porosität von 20-90%, bevorzugt von 50-80%, welches beidseitig mit einem hitzeaktivierbaren und strukturelle Verklebungen ermöglichenden Klebstoffsystem derart beschichtet ist, dass unter Einwirkung hoher Temperaturen das Trägermaterial vollständig von dem Klebstoff durchdrungen wird. JP 2009 063363 beschreibt ein Verfahren zum Bestimmen einer Adhäsionskraft zwischen einer Unterlage und einer Schicht durch Anbringen eines Zugstücks an der Unterlage und Ziehen des Zugstücks in eine Trennrichtung, wobei das Zugstück mit einem Bruchabschnitt versehen ist, der durch Ziehen, entsprechend dem Bestimmungsstandard, der Adhäsionskraft mit einer Kraft bricht.

Es ist daher eine Aufgabe der vorliegenden Erfindung, eine zuverlässige sowie aufwand- und zeitsparende Prüfmöglichkeit für eine Klebeverbindung zu schaffen.

Erfindungsgemäß wird diese Aufgabe durch einen Klebefilm mit den Merkmalen des Anspruchs 1 und/oder durch eine Anordnung mit den Merkmalen des Anspruchs 2 und/oder durch ein Verfahren mit den Merkmalen des Anspruchs 14 gelöst.

Demgemäß wird ein Klebefilm für eine strukturelle Klebeverbindung mit einem Substrat vorgeschlagen, wobei der Klebefilm eine Struktur aufweist und wobei mindestens in einem Teilbereich des Klebefilms eine mechanische Festigkeit der Struktur derart an eine vordefinierte Soll-Anbindungskraft einer unter Verwendung des Klebefilms erzeugten Klebung angepasst ist, dass nach Fertigstellung der Klebung bei einem Abziehen des Klebefilms von dem Substrat oder von einer Materialschicht mit einer schälenden Beanspruchung der Klebung zur Überprüfung der Klebeanbindung an das Substrat oder an die Materialschicht der Klebefilm unter Überschreiten der mechanischen Festigkeit der Struktur versagt, wenn die Belastbarkeit der Klebung die Soll-Anbindungskraft erreicht oder überschreitet, und der Klebefilm bei dem Abziehen mindestens in dem Teilbereich nicht versagt, wenn die Belastbarkeit der Klebung die Soll-Anbindungskraft nicht erreicht.

Ferner wird ein Verfahren zur Überprüfung einer Klebeanbindung bei einer unter Verwendung eines derartigen Klebefilms hergestellten strukturellen Klebeverbindung mit einem Substrat bereitgestellt. Hierbei wird nach Fertigstellung einer unter Verwendung des Klebefilms erzeugten Klebung zur Überprüfung der Klebeanbindung an das Substrat und/oder an eine Materialschicht ein Prüfabschnitt mit einer schälenden Beanspruchung der Klebung von dem Substrat und/oder von der Materialschicht abgezogen. Der Prüfabschnitt ist hierbei mit einem Abschnitt des Klebefilms gebildet.

Weiterhin wird eine Anordnung zur Überprüfung einer Klebeanbindung vorgeschlagen. Die Anordnung weist ein Substrat, eine mit dem Substrat mittels eines Klebefilms zur Bildung einer strukturellen Klebeverbindung verklebte Komponente, und mindestens einen Prüfabschnitt auf. Hierbei ist der Prüfabschnitt mit einem sich mindestens über einen Teil eines Randes der mit dem Substrat verklebten Komponente hinaus erstreckenden Überstand des Klebefilms ausgebildet. Der Überstand ist bereichsweise mit dem Substrat verklebt. Insbesondere kann der erfindungsgemäße Klebefilm bei der Anordnung zum Einsatz kommen.

Darüber hinaus wird ein Verfahren zur Überprüfung einer Klebeanbindung geschaffen, welches folgende Schritte aufweist:
- Anordnen eines Substrats, einer mit dem Substrat zu verklebenden Komponente und eines Klebefilms in der Weise, dass ein Abschnitt des Klebefilms zur Herstellung einer strukturellen Klebeverbindung zwischen dem Substrat und der Komponente angeordnet wird und der Klebefilm sich mindestens über einen Teil eines Randes der Komponente hinaus erstreckt und einen Überstand bildet;
- Aushärten mindestens des Klebefilms; und
- Schälendes Abziehen eines Prüfabschnitts, der mit dem sich mindestens über den Teil des Randes der Komponente hinaus erstreckenden Überstand des Klebefilms ausgebildet ist, von dem Substrat.

Insbesondere kann bei dem Verfahren der erfindungsgemäß vorgeschlagene Klebefilm zur Verklebung der Komponente mit dem Substrat verwendet werden.

Die der Erfindung zu Grunde liegende Idee besteht darin, einen Klebefilm selbst für die Überprüfung der Widerstandsfähigkeit einer mittels desselben erzeugten Klebung, insbesondere gegen eine Schälbeanspruchung, zu nutzen. Separate Probestücke müssen hierbei nicht hergestellt werden. Die Überprüfung kann ohne unerwünschte Verzögerung und mit wenig Zeitaufwand nach der Erzeugung der Klebeverbindung durchgeführt werden. Mittels der Erfindung gelingen eine Überprüfung und ein Nachweis der Qualität der Klebeanbindung an das Substrat sowohl bei geplanten Klebebaugruppen als auch bei Reparaturen und Nacharbeiten.

Bei geplanten Klebeverbindungen wird mit Hilfe der Erfindung eine zuverlässige Qualitätsüberprüfung mit erheblich verringertem Aufwand an Material, Personal, Zeit und Kosten möglich, zumal die Herstellung separater Proben und Wartezeiten auf Laborergebnisse vermieden werden.

Im Falle von Reparaturen und Nacharbeiten wird mit der Erfindung vorteilhaft eine Überprüfung der Qualität der Klebeverbindung mit verbesserter Zuverlässigkeit möglich. Hierzu trägt vorteilhaft bei, dass bei der Erfindung die Prüfung auch das Originalsubstrat, an dem die Reparatur oder Nacharbeit vorgenommen wird, und denselben Verfahrenszyklus, mittels dem die eigentliche für die Reparatur oder Nacharbeit durchgeführte Klebung hergestellt wird, einbezieht. Beispielsweise wird es möglich, unter Nutzung desselben Vakuum- und/oder Heizaufbaus, der auch für die eigentliche Klebung verwendet wird, eine Prüfmöglichkeit zu erzeugen. Somit kann vom Ergebnis der Prüfung mit verbesserter Zuverlässigkeit auf die Qualität der Klebeverbindung geschlossen werden.

Mit der Erfindung gelingt es vorteilhaft, die Qualität der Klebeverbindung zuverlässig zu überprüfen und den Zeit-, Material-, Personal- und Kostenaufwand im Zusammenhang mit der Überprüfung vorteilhaft zu vermindern. Sofern die Prüfung erfolgreich und die Qualität der Klebeverbindung hinreichend gut ist, wird mit der Erfindung eine zerstörungsfreie Prüfmöglichkeit geschaffen, d. h. die eigentliche strukturelle und zu überprüfende Klebeverbindung wird nicht beeinträchtigt, wenn diese die geforderte Qualität aufweist.

Das Prüfergebnis ist zudem schnell verfügbar, was mit Blick auf die Weiterverarbeitung der Klebebaugruppe in weiteren Arbeitsschritten vorteilhaft ist. Beispielsweise können Verzögerungen in der Weiterverarbeitung aufgrund eventuell erst zeitverzögert verfügbarer Laborergebnisse vermieden werden.

Bei Reparaturen beispielsweise an einem Luft- oder Raumfahrzeug, wie etwa einem Flugzeug, ermöglicht die schnelle Verfügbarkeit des Prüfergebnisses vorteilhaft eine Verkürzung der für die Reparatur vorzusehenden Zeit und eine Verkürzung von Zeiten, in denen das Flugzeug aufgrund der Reparatur am Boden bleibt.

Unter einer Soll-Anbindungskraft soll vorliegend insbesondere eine Kraft verstanden werden, die von der Klebung unter schälender Beanspruchung mindestens ausgehalten wird, ohne dass die Klebung versagt. Mit anderen Worten kann mittels der Erfindung somit nachgewiesen werden, ob eine Soll-Anbindungskraft im Sinne einer erreichten Mindest-Adhäsionskraft erreicht wird und die Klebung somit eine ausreichende Qualität aufweist, oder ob im gegenteiligen Falle die Qualität der Klebung nicht ausreicht und die Mindest-Adhäsionskraft nicht erreicht wird, ein Abschälen also bereits bei zu geringen angreifenden Kräften auftritt.

Die mechanische Festigkeit der Struktur, wie diese im Rahmen der vorliegenden Anmeldung verstanden werden soll, kann in vielerlei Weise definiert sein. Beispielsweise kann es sich bei der mechanischen Festigkeit der Struktur vorliegend um eine Reißfestigkeit der Struktur und/oder eine Bruchfestigkeit der Struktur handeln. Die mechanische Festigkeit der Struktur kann zum Beispiel eine Reißfestigkeit der Struktur unter Zugbeanspruchung, somit eine Zugfestigkeit der Struktur, sein. Jedoch kann es sich bei der mechanischen Festigkeit alternativ um eine Bruchfestigkeit der Struktur unter Biegebeanspruchung handeln. Mechanische Festigkeiten anderer Definition können in Betracht kommen.

In Abhängigkeit von dem erwarteten bestimmenden Versagensmodus, unter dem der auf Schälen beanspruchte Klebefilm im Falle einer Klebung hinreichender Qualität versagen soll, kann eine passend ausgewählte mechanische Festigkeit der Struktur an die Soll-Anbindungskraft angepasst werden. Als Versagensmodus des Klebefilms kommt zwar ein Reißen auf Zug in Betracht, es können jedoch beispielsweise auch Bruchmechanismen, die auf Biegung beruhen, in Betracht kommens.

Vorteilhafte Ausgestaltungen und Weiterbildungen der Erfindung ergeben sich aus den Unteransprüchen sowie aus der Beschreibung unter Bezugnahme auf die Figuren.

Die Struktur das Klebefilms ist als eine Trägerstruktur des Klebefilms, insbesondere eine interne Trägerstruktur des Klebefilms, ausgebildet. Die Struktur, deren mechanische Festigkeit an die Soll-Anbindungskraft angepasst ist, kann somit weitere Aufgaben übernehmen, etwa die Bereitstellung einer Klebemittelschicht definierter Dicke zur Sicherstellung einer zuverlässigen Klebung.

Die Trägerstruktur ist mit einem textilen Gebilde, insbesondere einem Vlies oder einem Gewebe oder einem Gewirk, ausgebildet.

In einem Teilgebiet des Klebefilms ist die Struktur mit einer zusätzlichen Verstärkungskomponente ausgebildet, wobei die zusätzliche Verstärkungskomponente zur Bildung des Klebefilms auf einen Ausgangs-Klebefilm aufgebracht oder in den Ausgangs-Klebefilm eingebracht ist. Hierbei ist die an die Soll-Anbindungskraft angepasste mechanische Festigkeit eine mechanische Festigkeit der Struktur einschließlich der zusätzlichen Verstärkungskomponente. Dies ist vorteilhaft, falls eine Struktur des Ausgangs-Klebefilms, beispielsweise eine interne Trägerstruktur des Ausgangs-Klebefilms, nicht die passende mechanische Festigkeit aufweist und/oder eine Trägerstruktur des Ausgangs-Klebefilms nicht oder nur aufwändig abgeändert werden kann. Durch die auf- oder eingebrachte Verstärkungskomponente, bei der es sich um eine zusätzliche Trägerkomponente handeln kann, kann die mechanische Festigkeit der Struktur angepasst werden. Die Struktur umfasst in diesem Falle somit eine gegebenenfalls bereits vorhandene, z. B. interne, Trägerstruktur oder -komponente des Ausgangs-Klebefilms und die zusätzliche Verstärkungskomponente, wobei die zusätzliche Verstärkungskomponente eine genaue Einstellung der mechanischen Festigkeit in Bezug auf die Soll-Anbindungskraft ermöglicht.

Die zusätzliche Verstärkungskomponente ist mit einem textilen Gebilde, insbesondere einem Vlies, einem Gewebe oder einem Gewirk, ausgebildet.

Beispielsweise kann in einer Ausgestaltung die Struktur zumindest in einem Teilgebiet des Klebefilms zwei oder mehr Trägerkomponenten, die gemeinsam die als Trägerstruktur ausgebildete Struktur des Klebefilms bilden, aufweisen, wobei die an die Soll-Anbindungskraft angepasste mechanische Festigkeit eine mechanische Festigkeit der Trägerstruktur einschließlich der zwei oder mehr Trägerkomponenten ist. Die Trägerkomponenten können jeweils mit einem textilen Gebilde, insbesondere einem Vlies oder einem Gewebe oder einem Gewirk, ausgebildet sein. Auf diese Weise kann eine Einstellung der mechanischen Festigkeit durch Kombination der Trägerkomponenten erreicht werden. Mit Blick auf den Begriff der mechanischen Festigkeit der Trägerstruktur gilt das oben in Bezug auf die mechanische Festigkeit der Struktur Gesagte analog.

Der Klebefilm weist ein aushärtbares Klebemittel auf, welches ein Epoxiharz beinhaltet.

In einer Ausgestaltung des Klebefilms kann dieser für ein schälendes Abziehen von dem Substrat und der Materialschicht ausgebildet und die mechanische Festigkeit der Struktur für die Überprüfung der Klebeanbindung an das Substrat und an die Materialschicht angepasst sein.

In einer Ausgestaltung ist eine mechanische Festigkeit des Prüfabschnitts mindestens in einem Teilbereich des Prüfabschnitts derart an eine vordefinierte Soll-Anbindungskraft einer unter Verwendung des Klebefilms erzeugten Klebung angepasst, dass nach Fertigstellung der Klebung bei einem Abziehen des Prüfabschnitts von dem Substrat mit einer schälenden Beanspruchung der Klebung der Prüfabschnitt unter Überschreiten der mechanischen Festigkeit desselben abreißt, wenn die Belastbarkeit der Klebung die Soll-Anbindungskraft erreicht oder überschreitet, und der Prüfabschnitt bei dem Abziehen mindestens in dem Teilbereich nicht abreißt, wenn die Belastbarkeit der Klebung die Soll-Anbindungskraft nicht erreicht. Somit kann schnell und einfach geprüft werden, wie die Qualität der Klebung ausfällt.

Auch die mechanische Festigkeit des Prüfabschnitts kann, analog dem oben betreffend den Begriff der mechanischen Festigkeit der Struktur Gesagten, in vielerlei Weise definiert sein. Zum Beispiel kann es sich bei der mechanischen Festigkeit des Prüfabschnitts um eine Reißfestigkeit desselben und/oder eine Bruchfestigkeit desselben handeln. Die mechanische Festigkeit des Prüfabschnitts könnte also zum Beispiel eine Reißfestigkeit des Prüfabschnitts unter Zugbeanspruchung, somit eine Zugfestigkeit des Prüfabschnitts, sein. Es kann sich bei der mechanischen Festigkeit jedoch alternativ beispielsweise um eine Bruchfestigkeit des Prüfabschnitts unter Biegebelastung handeln. Mechanische Festigkeiten anderer Definitionen können auch im Falle des Prüfabschnitts in Betracht kommen.

Mit Blick auf die hier verwendete Begrifflichkeit des "Abreißens" des Prüfabschnitts sei angemerkt, dass dieser Begriff vorliegend sowohl insbesondere ein Reißen unter Zug als auch beispielsweise ein Brechen, etwa unter Biegung, oder ein sonstiges Versagen des Prüfabschnitts, das zur Abtrennung eines Teils desselben führt, oder eine beliebige Kombination hiervon, umfassen soll.

In einer Ausgestaltung weist der Klebefilm eine Struktur auf, wobei mindestens in dem Teilbereich des Prüfabschnitts eine mechanische Festigkeit der Struktur derart an die Soll-Anbindungskraft der unter Verwendung des Klebefilms erzeugten Klebung angepasst ist, dass bei dem Abziehen des Prüfabschnitts der Klebefilm unter Überschreiten der mechanischen Festigkeit der Struktur versagt, wenn die Belastbarkeit der Klebung die Soll-Anbindungskraft erreicht oder überschreitet, und der Klebefilm bei dem Abziehen mindestens in dem Teilbereich nicht versagt, wenn die Belastbarkeit der Klebung die Soll-Anbindungskraft nicht erreicht. Auf diese Weise kann die mechanische Festigkeit des Prüfabschnitts vorteilhaft durch geeignete Ausbildung des Klebefilms eingestellt und an die Soll-Anbindungskraft angepasst werden.

In einer Ausgestaltung weist die Anordnung ferner ein Zwischenelement, welches von dem Rand der mit dem Substrat verklebten Komponente beabstandet angeordnet ist, auf. Der Überstand erstreckt sich derart bereichsweise über das Zwischenelement, dass sich das Zwischenelement bereichsweise zwischen dem Überstand und dem Substrat befindet, wobei der Überstand zwischen dem Rand der mit dem Substrat verklebten Komponente und dem Zwischenelement mit dem Substrat verklebt ist. Zwischen dem Zwischenelement und dem Rand der Komponent liegt somit ein verklebter Bereich des Überstands vor, der testweise belastet werden kann, ohne die eigentliche Klebeverbindung von Komponente und Substrat zu schädigen. Das Zwischenelement sorgt vorteilhaft bei dem Abziehen des Prüfabschnitts für einen Anriss und stellt, nach Ablösen des Prüfabschnitts von dem Zwischenelement, eine Möglichkeit bereit, den Prüfabschnitt manuell oder mittels eines Werkzeuges oder einer Vorrichtung zu greifen.

Insbesondere kann in einer Weiterbildung der Überstand vorteilhaft auf dem Zwischenelement enden. Dies verbessert die Handhabung des Prüfabschnitts weiter.

Vorzugsweise ist der Überstand von dem Zwischenelement leicht ablösbar. Auch dies erleichtert und beschleunigt die Handhabung des Prüfabschnitts.

In einer Ausgestaltung ist mindestens in einem ersten Teilgebiet des Prüfabschnitts eine zusätzliche Verstärkungskomponente vorgesehen. Auf diese Weise kann die mechanische Festigkeit des Prüfabschnitts wirkungsvoll beeinflusst werden.

In einer Ausgestaltung ist die zusätzliche Verstärkungskomponente als ein Teil der Struktur des Klebefilms ausgebildet, wobei die an die Soll-Anbindungskraft angepasste mechanische Festigkeit der Struktur eine mechanische Festigkeit der Struktur einschließlich der zusätzlichen Verstärkungskomponente ist. Die Vorteile der zusätzlichen Verstärkungskomponente wurden oben bereits genannt.

In einer Weiterbildung endet das erste Teilgebiet zwischen dem Zwischenelement und der mit dem Substrat verklebten Komponente vor Erreichen der mit dem Substrat verklebten Komponente. Es wird somit eine Sollreißstelle geschaffen, an oder nahe der der Prüfabschnitt abreißen soll, wenn die Klebeanbindung ausreichend ist. Erfolgt das Abreißen hingegen erst nach dem Ende des ersten Teilgebiets dort, wo die Verstärkungskomponente im Prüfabschnitt nicht mehr vorhanden ist, kann auf eine zu geringe Belastbarkeit der Klebung geschlossen werden.

In einer Weiterbildung überlappt das erste Teilgebiet mit dem Zwischenelement zumindest abschnittsweise und erstreckt sich über einen Abschnitt eines Randes des Zwischenelements hinweg. Somit kann sichergestellt werden, dass beim Abziehen Kräfte wirkungsvoll auf das verstärkte erste Teilgebiet des Prüfabschnitts aufgebracht werden.

In einer Ausgestaltung ist in einem zweiten Teilgebiet des Prüfabschnitts auf dem Überstand eine zusätzliche Materialschicht mit erhöhter Reißfestigkeit angeordnet. Mit dieser Ausgestaltung wird nicht nur die Überprüfung der Belastbarkeit der Klebung im Sinne der Anbindungskraft, sondern auch eine Untersuchung des Bruchbildes und somit des Versagensmodus der Klebung möglich. Die zusätzliche Materialschicht erhöhter Reißfestigkeit sorgt dafür, dass die Klebung des Prüfabschnitts bereichsweise an der Klebeoberfläche aufreißt, der Prüfabschnitt somit dort bereichsweise gewollt abschält und ein Oberflächenbild der Abrissfläche zu erkennen gibt. Die Art des Versagens kann beispielsweise unter Zuhilfenahme einer Oberflächenstruktur der Klebepartner, die etwa durch Anschleifen oder Abziehen eines Abziehgewebes ("Peel ply") vor der Verklebung erzeugt wurde, geprüft werden.

Insbesondere ist in einer Weiterbildung eine Reißfestigkeit der zusätzlichen Materialschicht so groß, dass der Prüfabschnitt in dem zweiten Teilgebiet auch bei der maximalen Kraft, die beim Abziehen des Überstands aufgebracht wird, nicht abreißt.

In einer Weiterbildung endet das zweite Teilgebiet zwischen dem Zwischenelement und der mit dem Substrat verklebten Komponente vor Erreichen der mit dem Substrat verklebten Komponente. Hierdurch kann erreicht werden, dass zusätzlich zur Untersuchung des Bruchbildes auch die Anbindungskraft getestet werden kann.

Insbesondere überlappt in einer Weiterbildung das zweite Teilgebiet mit dem Zwischenelement zumindest abschnittsweise und erstreckt sich hierbei über einen Abschnitt eines Randes des Zwischenelements hinweg. Auch bei dieser Ausgestaltung kann sichergestellt werden, dass beim Abziehen Kräfte wirkungsvoll auf das mit der zusätzlichen Materialschicht versehene zweite Teilgebiet des Prüfabschnitts aufgebracht werden und das Aufreißen der Klebung im beabsichtigten Bereich zuverlässig erfolgt.

Bei einer weiteren Ausgestaltung überlappt das erste Teilgebiet mit dem zweiten Teilgebiet abschnittsweise, erstreckt sich über ein Ende des zweiten Teilgebiets hinweg und endet zwischen dem Ende des zweiten Teilgebiets und der aufgeklebten Komponente vor Erreichen der aufgeklebten Komponente. Hierbei wird vorteilhaft in Kombination sowohl die Untersuchung des Bruchbildes als auch der aushaltbaren Kraft bei schälender Belastung möglich. Ist die Klebung von guter Qualität, dann reißt der Prüfabschnitt im Bereich des Endes des zweiten Teilgebiets an einer Sollreißstelle ab, wo die Verstärkungskomponente vorhanden und die mechanische Festigkeit des Prüfabschnitts definiert für die Beurteilung der Anbindungskraft der Klebung eingestellt ist. Ist die Klebung hingegen von nicht ausreichender Qualität, so versagt der Prüfabschnitt erst durch Hindurch- oder Abreißen am Ende des ersten Teilgebiets oder es kommt gar zu einem Aufreißen der Klebung bis in den Bereich der mit dem Substrat verklebten Komponente hinein. Bei einer guten Klebung werden die Komponente und deren Klebeverbindung mit dem Substrat nicht geschädigt.

In einer Ausgestaltung kann eine mechanische Festigkeit des Prüfabschnitts mindestens in einem Teilbereich des Prüfabschnitts derart an eine vordefinierte Soll-Anbindungskraft der unter Verwendung des Klebefilms erzeugten Klebung angepasst sein, dass nach Fertigstellung der Klebung bei einem Abziehen des Prüfabschnitts von der zusätzlichen Materialschicht mit einer schälenden Beanspruchung der Klebung der Prüfabschnitt unter Überschreiten der mechanischen Festigkeit desselben abreißt, wenn die Belastbarkeit der Klebung die Soll-Anbindungskraft erreicht oder überschreitet, und der Prüfabschnitt bei dem Abziehen mindestens in diesem Teilbereich nicht abreißt, wenn die Belastbarkeit der Klebung die Soll-Anbindungskraft nicht erreicht. Hierbei kann wiederum vorgesehen sein, dass mindestens in diesem Teilbereich des Prüfabschnitts eine mechanische Festigkeit der Struktur derart an die Soll-Anbindungskraft angepasst ist, dass bei dem Abziehen des Prüfabschnitts von der zusätzlichen Materialschicht der Klebefilm unter Überschreiten der mechanischen Festigkeit der Struktur versagt, wenn die Belastbarkeit der Klebung die Soll-Anbindungskraft erreicht oder überschreitet, und der Klebefilm bei dem Abziehen mindestens in dem Teilbereich nicht versagt, wenn die Belastbarkeit der Klebung die Soll-Anbindungskraft nicht erreicht. Zur Anpassung der mechanischen Festigkeit in diesem Teilbereich zur Prüfung der Klebeanbindung gegenüber der zusätzlichen Materialschicht kann insbesondere eine weitere, zusätzliche Verstärkungskomponente in einem dritten Teilgebiet des Prüfabschnitts vorgesehen sein.

In einer Ausgestaltung weist die Anordnung ferner ein weiteres Zwischenelement auf, welches von dem Rand der mit dem Substrat verklebten Komponente beabstandet angeordnet ist. Der Überstand erstreckt sich hierbei bereichsweise zwischen das Zwischenelement und das weitere Zwischenelement. Auf diese Weise können die Prüfmöglichkeiten für die Klebeanbindung noch erweitert werden, insbesondere wenn die zusätzliche Materialschicht vorgesehen ist.

Das weitere Zwischenelement kann in einer weiteren Ausgestaltung eine Folie, insbesondere als eine Trennfolie, ausgebildet sein. Vorzugsweise ist der Überstand von dem weiteren Zwischenelement leicht ablösbar.

Vorzugsweise erstreckt sich in einer Ausgestaltung das weitere Zwischenelement zwischen einem Abschnitt des Überstands und einem Abschnitt der zusätzlichen Materialschicht.

Bei einer weiteren Weiterbildung ist der Überstand in einem Bereich zwischen einem der Komponente zugewandten Rand des Zwischenelements und einem der Komponente zugewandten Rand des weiteren Zwischenelements mit der zusätzlichen Materialschicht verklebt. Dies ermöglicht vorteilhaft ein Testen der Klebeanbindung an die zusätzliche Materialschicht. Das weitere Zwischenelement sorgt bei dieser Weiterbildung vorteilhaft für einen Anriss und eine Griffmöglichkeit.

In einer Ausgestaltung ist mindestens in einem dritten Teilgebiet des Prüfabschnitts eine weitere, zusätzliche Verstärkungskomponente vorgesehen, wobei sich das dritte Teilgebiet von dem ersten Teilgebiet unterscheidet. Auf diese Weise kann die mechanische Festigkeit des Prüfabschnitts in einem weiteren Gebiet wirkungsvoll beeinflusst werden. Die zusätzliche Verstärkungskomponente kann ebenfalls beispielsweise mit einem textilen Gebilde, insbesondere einem Vlies, einem Gewebe oder einem Gewirk, ausgebildet sein.

In einer Ausgestaltung ist die weitere, zusätzliche Verstärkungskomponente als ein Teil der Struktur des Klebefilms ausgebildet, wobei die an die Soll-Anbindungskraft angepasste mechanische Festigkeit der Struktur in dem dritten Teilgebiet eine mechanische Festigkeit der Struktur einschließlich der weiteren, zusätzlichen Verstärkungskomponente ist.

Die weitere, zusätzliche Verstärkungskomponente kann in einer Weiterbildung zwischen dem Klebefilm und dem Zwischenelement angeordnet sein.

In einer Weiterbildung endet das dritte Teilgebiet zwischen dem der Komponente zugewandten Rand des weiteren Zwischenelements und dem der Komponente zugewandten Rand des Zwischenelements. Es wird somit eine weitere Sollreißstelle geschaffen, an oder nahe der der Prüfabschnitt abreißen soll, wenn die Klebeanbindung an die zusätzliche Materialschicht ausreichend ist.

In einer Weiterbildung überlappt somit das zweite Teilgebiet, in dem die zusätzliche Materialschicht angeordnet ist, mit dem dritten Teilgebiet zumindest abschnittsweise.

In einer Ausgestaltung kann die Anordnung mehrere, zum Beispiel zwei, Prüfabschnitte aufweisen, die jeweils mit einem Überstand des Klebefilms ausgebildet sind. Beispielsweise kann sich jeweils ein Überstand an entgegengesetzten Seiten der Komponente zur Bildung jeweils eines Prüfabschnitts über einen zugeordneten Teil des Randes der Komponente hinaus erstrecken. Beispielsweise kann hierbei zur noch weiteren Verbesserung der Zuverlässigkeit der Prüfung der Klebeanbindung diese mit Hilfe mehrerer Prüfabschnitte mehrmals, beispielsweise zweimal, getestet werden. Die mehreren Prüfabschnitte können insbesondere, mit Ausnahme deren Anordnung relativ zu der Komponente, gleichartig ausgebildet sein.

Bei einer weiteren Ausgestaltung ist das Zwischenelement als eine Folie, insbesondere als eine Trennfolie, ausgebildet. Somit wird ein festes Anhaften und Verkleben des Überstands im Bereich des Zwischenelements vermieden.

In einer Ausgestaltung ist die mit dem Substrat verklebte Komponente mit einem Laminat oder mit einer Laminatlage ausgebildet.

In einer weiteren Ausgestaltung ist die mit dem Substrat verklebte Komponente mit einem Faserverbundwerkstoff, insbesondere einem faserverstärkten Kunststoffmaterial, mit einer Matrix und Verstärkungsfasern ausgebildet.

In einer Weiterbildung ist die mit dem Substrat zu verklebende Komponente bereits ausgehärtet, bevor unter Verwendung des Klebefilms die Klebung erzeugt wird, wobei in diesem Fall, falls in dem zweiten Teilgebiet die zusätzliche Materialschicht vorgesehen ist, auch die zusätzliche Materialschicht bereits ausgehärtet ist.

In einer bevorzugten Ausgestaltung jedoch ist die mit dem Substrat zu verklebende Komponente vor der Erzeugung der Klebung noch nicht oder noch nicht vollständig ausgehärtet, wobei ein Aushärten der Komponente beispielsweise während des Aushärtens des Klebefilms erfolgt. Bei dieser Ausgestaltung ist, falls in dem zweiten Teilgebiet die zusätzliche Materialschicht vorgesehen ist, die zusätzliche Materialschicht ebenfalls nicht oder nicht vollständig ausgehärtet, bevorzugt in gleicher Weise wie die mit dem Substrat zu verklebende Komponente.

In einer Ausgestaltung ist die zusätzliche Materialschicht als eine faserverstärkte Materialschicht ausgebildet, insbesondere mit einem faserverstärkten Kunststoffmaterial.

In einer Ausgestaltung ist die zusätzliche Materialschicht als eine Lage eines Laminats ausgebildet, wobei die zusätzliche Materialschicht vorzugsweise in gleicher Weise ausgebildet ist wie eine Materialschicht der aufgeklebten Komponente. Dies kann zum Beispiel die Aussagekraft der Untersuchung des Bruchbildes, das bei dem Abziehen des Prüfabschnitts erzeugt wird, weiter verbessern.

Bei einer Ausgestaltung ist das Substrat mit einem Faserverbundwerkstoff, insbesondere einem faserverstärkten Kunststoffmaterial, mit einer Matrix und Verstärkungsfasern ausgebildet.

In einer bevorzugten Ausgestaltung ist das Substrat bereits ausgehärtet, bevor unter Verwendung des Klebefilms die Klebung erzeugt wird. Das Substrat kann somit als eine bereits ausgehärtete Faserverbundkomponente vorliegen. Alternativ könnte jedoch stattdessen das Substrat noch unausgehärtet oder nicht vollständig ausgehärtet sein und ein weiteres Aushärten desselben beispielsweise während des Aushärtens des Klebefilms erfolgen.

In weiteren Ausgestaltungen weisen das Substrat und/oder die mit dem Substrat verklebte Komponente und/oder die zusätzliche Materialschicht als Verstärkungsfasern Kohlenstofffasern oder Glasfasern auf.

Insbesondere wenn die mit dem Substrat zu verklebende Komponente und das Substrat jeweils bereits ausgehärtet sind, werden in einer Ausgestaltung die mit dem Substrat zu verklebende Komponente und das Substrat vor der Erzeugung der Klebung jeweils vorbehandelt. Dies kann beispielsweise durch Anschleifen, mittels Abziehens eines Abziehgewebes, durch Sandstrahlen oder durch Plasmaaktivierung vorgenommen werden. Bei dieser Ausgestaltung wird die Vorbehandlung des Substrats auch in dem Bereich desselben durchgeführt, in dem der Überstand mit dem Substrat verklebt wird. Auf diese Weise wird wiederum sichergestellt, dass das Prüfergebnis eine verlässliche Auskunft über die eigentliche Klebung zwischen der Komponente und dem Substrat gibt. Falls in einer Variante dieser Ausgestaltung eine ebenfalls bereits ausgehärtete zusätzliche Materialschicht in dem zweiten Teilgebiet vorgesehen ist, wird diese ebenfalls vorzugsweise in gleicher Weise vorbehandelt wie die aufzuklebende Komponente.

In einer Ausgestaltung wird der Prüfabschnitt von Hand oder unter Verwendung einer Zange oder unter Verwendung einer Walzvorrichtung von dem Substrat abgezogen. Das Abziehen von Hand oder mittels einer Zange ermöglicht eine einfache Prüfung der Klebeanbindung, während die Nutzung einer Vorrichtung zum Abziehen einen in verbesserter Weise definierten Prüfvorgang ermöglicht.

In einer Ausgestaltung wird nach dem schälenden Abziehen des Prüfabschnitts von dem Substrat und einem dabei erfolgten Abreißen des Prüfabschnitts ein in dem abgerissenen Stück des Prüfabschnitts verbleibender Teil des Überstands, insbesondere nach Ablösen desselben von dem weiteren Zwischenelement, schälend von der in dem abgerissenen Stück ebenfalls verbleibenden zusätzlichen Materialschicht abgezogen. Hierbei kann bevorzugt der verbleibende Teil des Überstands die weitere, zusätzliche Verstärkungskomponente, falls diese in dem dritten Teilgebiet des Prüfabschnitts vorgesehen ist, beinhalten. Auf diese Weise wird die Überprüfung der Anbindungskraft an die zusätzliche Materialschicht vorteilhaft möglich, wodurch Rückschlüsse auf die Klebeanbindung zwischen Klebefilm und Komponente möglich sind. Gerade bei bereits ausgehärteter Komponente kann dies von Vorteil sein.

Bei einer vorteilhaften Ausgestaltung kann die Erfindung auf geplante Klebeverbindungen, insbesondere bei der Herstellung von Faserverbundbauteilen, angewandt werden. Beispielsweise wird es mit Hilfe der Erfindung möglich, eine geplante Klebebaugruppe, bei der etwa ein Bauteil als Komponente mit dem Substrat verklebt werden soll, auf deren Qualität hin auf schnellere und einfachere Weise zu prüfen. Der Zeit- und Kostenaufwand für die Herstellung separater Proben und für Laboruntersuchungen an diesen kann vermindert werden.

In einer anderen Ausgestaltung kann die Erfindung vorteilhaft Anwendung auf Klebeverbindungen für Reparaturen oder strukturelle Nacharbeiten, insbesondere an Faserverbundbauteilen, finden. Eine Überprüfung der Klebung wird mit Hilfe der Erfindung somit auch in Situationen ermöglicht, in denen eine derartige Prüfung zuvor schwierig war.

Das Aushärten des Klebefilms einschließlich des Überstands kann in einer beispielhaften Ausgestaltung unter einem Vakuumaufbau, zum Beispiel mit lokaler Beheizung, erfolgen, insbesondere für eine Reparatur oder eine Nacharbeit.

In einer Ausgestaltung wird das Substrat vor der Erzeugung der Klebung oberflächlich bearbeitet, zum Beispiel durch Schleifen, beispielsweise zur Entfernung eines Blitzschutzes. Ein derartiger Blitzschutz kann zum Beispiel bei Faserverbundbauteilen von Luft- oder Raumfahrzeugen, wie etwa Flugzeugen, vorgesehen sein. Bei dieser Ausgestaltung wird das Substrat nicht nur in dem Bereich oberflächlich bearbeitet, in dem die Komponente mit dem Substrat zu verkleben ist, sondern auch in dem Bereich, in dem der Überstand des Klebefilms mit dem Substrat verklebt wird. Auf diese Weise kann wiederum sichergestellt werden, dass das Ergebnis der Prüfung die Verhältnisse im Bereich der eigentlichen Klebeverbindung der Komponente mit dem Substrat gut wiedergibt. Insbesondere werden durch die gleichartige vorherige oberflächliche Bearbeitung des Substrats im Bereich der aufzuklebenden Komponente und im Bereich des Überstands, mit dem der Prüfabschnitt gebildet ist, vergleichbare Bedingungen für die Klebung geschaffen. Diese Ausgestaltung kann insbesondere bei Reparaturarbeiten am Substrat, zum Beispiel mittels einer mit einem Laminat oder Laminatlagen ausgebildeten Komponente, vorteilhaft Anwendung finden.

Die Erfindung kann in Ausgestaltungen vorteilhaft Anwendung auf dem Gebiet der Luft- oder Raumfahrt, insbesondere bei der Herstellung und/oder Reparatur von Luft- oder Raumfahrzeugen, wie zum Beispiel Flugzeugen, finden.

Es versteht sich, dass, wenn bei den vorstehend beschriebenen Ausgestaltungen und Weiterbildungen die mit dem Substrat verklebte Komponente erwähnt wird, diese verklebte Komponente in entsprechenden verfahrensmäßigen Ausgestaltungen der Erfindung der mit dem Substrat zu verklebenden Komponente entspricht, und umgekehrt. Im Zusammenhang mit der Anordnung oder dem Klebefilm beschriebene Ausgestaltungen sind auf die Verfahren ebenfalls entsprechend anwendbar.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird nachfolgend anhand der in den schematischen Figuren angegebenen Ausführungsbeispiele näher erläutert. Hierbei zeigen:
- Fig. 1: eine Draufsicht (a) sowie eine Schnittansicht (b) einer Anordnung gemäß einem ersten Ausführungsbeispiel der Erfindung;
- Fig. 2: eine Draufsicht (a) sowie eine Schnittansicht (b) einer Anordnung gemäß einem zweiten Ausführungsbeispiel der Erfindung;
- Fig. 3: eine Draufsicht (a) sowie eine Schnittansicht (b) einer Anordnung gemäß einem dritten Ausführungsbeispiel der Erfindung;
- Fig. 4: eine Draufsicht (a) sowie eine Schnittansicht (b) einer Anordnung gemäß einem vierten Ausführungsbeispiel der Erfindung;
- Fig. 5: einen beispielhaften Schritt eines schälenden Abziehens eines Prüfabschnitts bei einer Anordnung gemäß dem ersten Ausführungsbeispiel mittels einer Walzvorrichtung, dargestellt in einer Schnittansicht der Anordnung;
- Fig. 6: eine Draufsicht (a) sowie eine Schnittansicht (b) einer Anordnung gemäß einem fünften Ausführungsbeispiel der Erfindung;
- Fig. 7: eine ausschnittsweise Schnittansicht einer Anordnung gemäß einem sechsten Ausführungsbeispiel der Erfindung; und
- Fig.8: eine ausschnittsweise Schnittansicht einer Anordnung gemäß einem siebten Ausführungsbeispiel der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren sind gleiche, funktionsgleiche und gleich wirkende Elemente, Merkmale und Komponenten - sofern nichts anderes ausgeführt ist - jeweils mit denselben Bezugszeichen versehen.

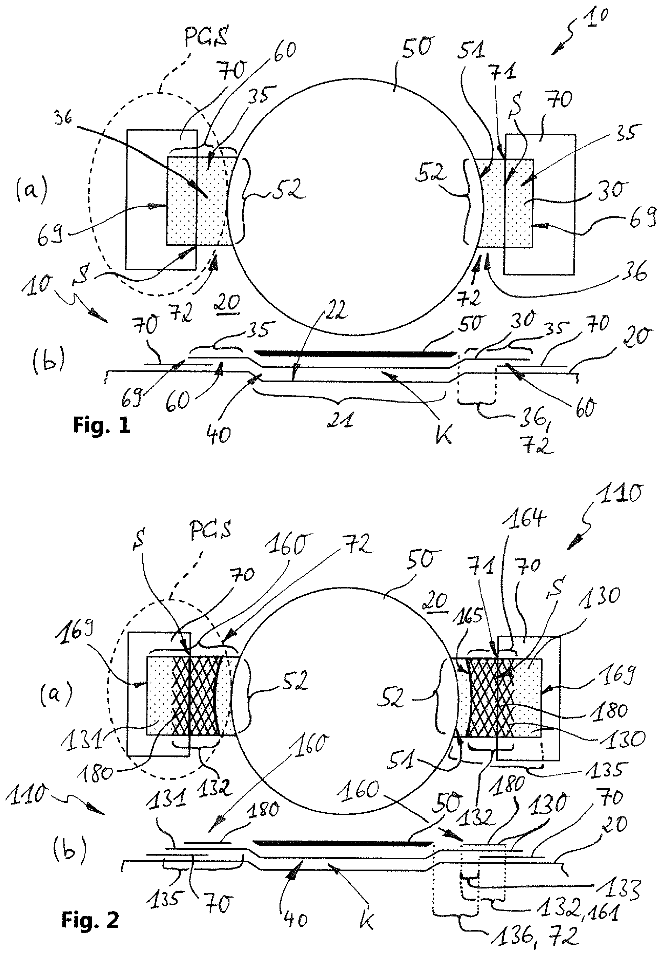

Fig. 1 zeigt eine Anordnung 10 zur Überprüfung einer Klebeanbindung gemäß einem ersten Ausführungsbeispiel. Mit einem Substrat 20 ist eine Komponente 50 verklebt, wobei in Fig. 1 die Komponente 50 beispielhaft auf die in Fig. 1 obere Oberfläche 22 des Substrats 20 aufgeklebt ist. Die Verklebung der Komponente 50 mit dem Substrat 20 wurde bei der Anordnung 10 mittels eines Klebefilms 30 erreicht. Hierzu wurde der Klebefilm 30 zwischen der Komponente 50 und dem Substrat 20 angeordnet. Somit ist mittels des Klebefilms 30 eine strukturelle Klebeverbindung 40 zwischen der Komponente 50 und dem Substrat 20 gebildet.

Bei dem Substrat 20 des ersten Ausführungsbeispiels handelt es sich beispielhaft um ein zu reparierendes Faserverbundbauteil eines Luft- oder Raumfahrzeugs, zum Beispiel eines Flugzeugs. Das Substrat 20 ist mit einem Faserverbundwerkstoff, insbesondere einem faserverstärkten Kunststoffmaterial, mit einer Matrix und Verstärkungsfasern ausgebildet. Die Matrix kann zum Beispiel mit einem Epoxidharz gebildet sein und als Verstärkungsfasern können Kohlenstofffasern oder Glasfasern vorgesehen sein.

In einem Gebiet 21 zur Aufnahme der als Reparatur-"Patch" ausgebildeten Komponente 50 ist das Substrat 20 mit einer flachen Vertiefung versehen, die vorzugsweise durch Schleifen eingebracht wird. Die Vertiefung im Gebiet 21 ist zur Größe der Komponente 50 korrespondierend bemessen und ermöglicht die Aufnahme der Komponente 50 zusammen mit dem Klebefilm 30 beispielhaft derart, dass die Komponente 50 nicht oder nicht wesentlich über die Oberfläche des Substrats 20 seitlich der Komponente 50 vorsteht. Die Komponente 50 der Fig. 1 ist im Bereich eines Randes 51 der Komponente 50 beispielhaft mit einer Schäftung versehen. Bei dem ersten Ausführungsbeispiel ist die Komponente 50 kreisrund ausgebildet, kann jedoch in Varianten anders geformt sein.

Der Klebefilm 30 erstreckt sich beidseits der Komponente 50 jeweils über einen zugeordneten Teil 52 des Randes 51 der Komponente 50 hinaus, wodurch im Bereich entgegengesetzter Seiten der Komponente 50 jeweils ein streifenförmiger Überstand 35 des Klebefilms 30 gebildet ist.

Die Anordnung 10 weist ferner zwei Zwischenelemente 70 auf, die auf dem Substrat 20 angeordnet sind. Die Komponente 50 ist zwischen den Zwischenelementen 70 angeordnet, in Fig. 1 beispielhaft in etwa mittig, derart, dass beide Zwischenelemente 70 jeweils von dem Rand 51 beabstandet sind. Zwischen jedem der Zwischenelemente 70 und der Komponente 50 ist somit ein Abstand 72 vorgesehen. Der Überstand 35 erstreckt sich jeweils mit seinem von der Komponente 50 aus gesehen distalen Ende bereichsweise über das Zwischenelement 70, wobei der Überstand 35 jeweils auf dem zugeordneten Zwischenelement 70 endet. Das Zwischenelement 70 befindet sich bereichsweise jeweils zwischen dem zugeordneten Überstand 35 und dem Substrat 20. Zwischen dem Rand 51 der Komponente 50 und dem zugeordneten Zwischenelement 70 ist der Überstand 35 jeweils in einem Bereich 36 desselben mit dem Substrat 20 verklebt. In Fig. 1 bildet jeder Überstand 35 als Abschnitt des Klebefilms 30 einen Prüfabschnitt 60, der an einem Ende 69 auf dem Zwischenelement 70 endet.

Der Klebefilm 30 weist ein Klebemittel und eine in Fig. 1 nicht dargestellte interne Trägerstruktur auf, die mit einem textilen Gebilde, insbesondere einem Vlies, einem Gewebe oder einem Gewirk, ausgebildet sein kann. Die Trägerstruktur ermöglicht eine zweckmäßige Handhabbarkeit des Klebefilms 30 und sorgt dafür, dass der Klebefilm 30 auch beim Aufbringen von Druck auf diesen noch eine Mindestdicke behält. Auf diese Weise wird eine hinreichende Dicke einer Klebemittelschicht sichergestellt. Bei dem Klebemittel kann es sich um ein aushärtbares Klebemittel handeln, welches beispielsweise ein Epoxidharz beinhaltet.

Eine mechanische Festigkeit der Trägerstruktur ist bei dem Klebefilm 30 insgesamt an eine vordefinierte Soll-Anbindungskraft einer unter Verwendung des Klebefilms 30 erzeugten Klebung K zur Bildung der strukturellen Klebeverbindung 40 angepasst. Die Anpassung ist derart getroffen, dass - nach Fertigstellung der Klebung K - bei einem Abziehen des Klebefilms 30 von dem Substrat 20 mit einer schälenden Beanspruchung der Klebung K zur Überprüfung der Klebeanbindung an das Substrat 20 der Klebefilm 30, umfassend die Trägerstruktur und das Klebemittel, unter Überschreiten der mechanischen Festigkeit der Trägerstruktur in Kombination mit dem Klebemittel versagt, wenn die Belastbarkeit der Klebung K die Soll-Anbindungskraft erreicht oder überschreitet. Der Klebefilm 30 versagt jedoch nicht, reißt also nicht ab, wenn die Belastbarkeit der Klebung K die Soll-Anbindungskraft nicht erreicht - in diesem Falle kommt es zu einem fortgesetzten Abschälen des Klebefilms 30.

Bei der mechanischen Festigkeit kann es sich beispielsweise um eine Reiß- oder Zugfestigkeit der Trägerstruktur handeln, die derart ausgewählt sein kann, dass die Trägerstruktur des Klebefilms 30 und damit der Klebefilm 30 bei Erreichen oder Überschreiten der Soll-Anbindungskraft versagen. In Varianten kann der Klebefilm 30 aber unter der Wirkung von Bruchmechanismen, die in der im Klebefilm 30 enthaltenen Kombination von Klebemittel und Trägerstruktur wirken und beispielsweise auf Biegung zurückgehen können, versagen, wenn die Soll-Anbindungskraft der Klebung K erreicht oder überschritten wird. In einem solchen Fall kann die angepasste mechanische Festigkeit eine Bruchfestigkeit oder Biegefestigkeit oder eine mechanische Festigkeit anderer Definition sein.

Um die Klebung K fertigzustellen, wird, nachdem die Zwischenelemente 70, der Klebefilm 30 und die Komponente 50 auf dem Substrat 20 angeordnet wurden, der Klebefilm 30 ausgehärtet. Bei dem ersten Ausführungsbeispiel ist bevorzugt die Komponente 50 nicht oder nicht vollständig ausgehärtet, so dass diese bei dem Aushärten des Klebefilms 30 ebenfalls aushärtet oder weiter aushärtet. Das Aushärten kann beispielsweise unter einem Vakuumaufbau mit lokaler Beheizung erfolgen. In einer Variante des ersten Ausführungsbeispiels kann die Komponente 50 jedoch bereits ausgehärtet sein, bevor der Klebefilm 30 zwischen der Komponente 50 und dem Substrat 20 angeordnet und der Klebefilm 30 ausgehärtet wird.

Um nachfolgend die Klebeanbindung im Bereich der Klebung K zu prüfen, wird nach Fertigstellung der Klebung K der Prüfabschnitt 60 an dessen Ende 69 von dem Zwischenelement 70 gelöst und mit einer schälenden Beanspruchung der Klebung K von dem Substrat 20 abgezogen. Auf diese Weise wird die Klebung K in dem Bereich 36 testweise belastet. Mit Hilfe des Zwischenelements 70 wird hierfür ein Anriss bereitgestellt, zudem wird das Ablösen des Endes 69 ermöglicht, um den Prüfabschnitt 60 an dessen Ende 69 greifen zu können. Das Zwischenelement 70 ist jeweils als eine Trennfolie ausgebildet, wodurch der Überstand 35 am Ende 69 des Prüfabschnitts 60 von dem Zwischenelement 70 leicht ablösbar ist.

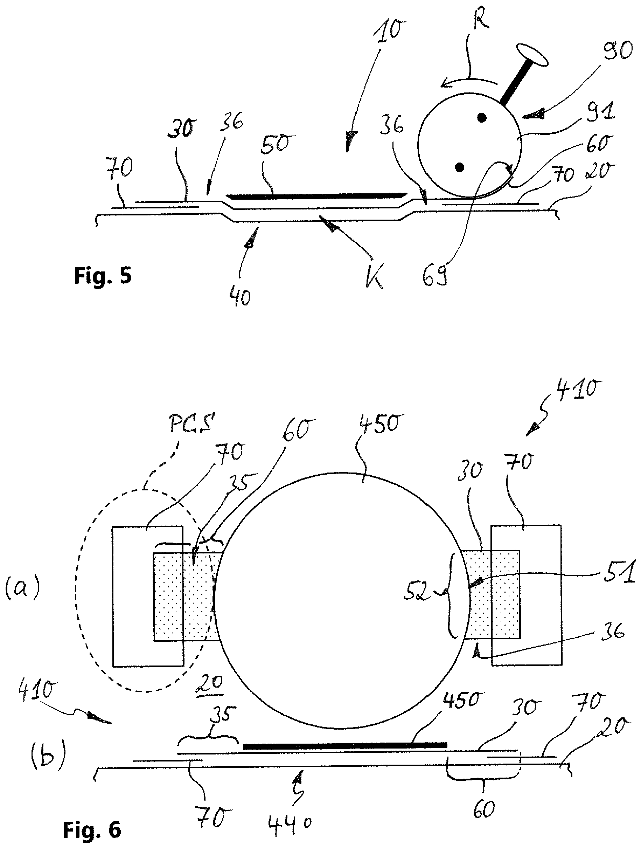

Das Abziehen des Prüfabschnitts 60 ist für das erste Ausführungsbeispiel in Fig. 5 schematisch gezeigt und erfolgt im Wesentlichen senkrecht zu der Komponente 50. Hierbei werden Schälkräfte erzeugt, die die Klebung K belasten. In Fig. 5 wird eine Kraft zum Abziehen des Prüfabschnitts 60 mittels einer Walzvorrichtung 90 aufgebracht. Hierbei kann das Ende 69 des Prüfabschnitts 60 am Umfang eines Walzenkörpers 91 der Walzvorrichtung 90 festgehalten und unter Rotation des Walzenkörpers 91, angedeutet in Fig. 5 durch den Pfeil R, abgezogen werden. Alternativ ist es möglich, das Ende 69 des Prüfabschnitts 60 von Hand oder mittels einer (nicht dargestellten) Zange zu greifen und den Prüfabschnitt 60 abzuziehen.

Mit Hilfe des Klebefilms 30 ist bei der Anordnung 10 die mechanische Festigkeit des Prüfabschnitts 60 in der Weise eingestellt, dass der Prüfabschnitt 60 unter Überschreiten der mechanischen Festigkeit desselben, beispielsweise einer Reiß- und/oder Bruchfestigkeit, abreißt, wenn die Anbindungskraft der Klebung K hinreichend groß ist und somit eine vordefinierte Soll-Anbindungskraft erreicht oder überschreitet. Da der Prüfabschnitt 60 bei hinreichender Qualität der Klebung K bereits vor Erreichen der Komponente 50, und vorzugsweise an einer Sollreiß- oder Sollbruchstelle S bereits an oder nahe einem Rand 71 des Zwischenelements 70 abreißt, wird die Klebeverbindung 40 von Substrat 20 und Komponente 50 nicht beeinträchtigt, wenn die Klebung K ausreichend gut ist. Der Rand 71 ist von der Komponente 50 aus gesehen ein proximaler Rand des Zwischenelements 70. Der Prüfabschnitt 60 reißt jedoch nicht an der Sollreißstelle S ab, wenn die Anbindungskraft der Klebung K zu gering ist und die Soll-Anbindungskraft daher nicht erreicht wird, sondern schält sich im Bereich 36 weiter ab.

Die Nutzung des Klebefilms 30 für die Überprüfung der Klebeanbindung im Bereich der Klebung K ermöglicht eine einfache Überprüfung, ob die vordefinierte Soll-Anbindungskraft erreicht wird, und vermeidet die Herstellung separater Proben sowie das Warten auf Laborergebnisse. Zudem bezieht die Prüfung mittels des Prüfabschnitts 60 das Substrat 20, also im Falle der in Fig. 1 dargestellten Reparatur das bereits im Gebrauch befindliche Faserverbundbauteil, und dessen Vorgeschichte mit ein. Auch wird der Prüfabschnitt 60 mit dem Überstand 35 den gleichen Verfahrensschritten ausgesetzt, wie sie zur Erzeugung der Klebung K der Komponente 50 mit dem Substrat 20 ausgeführt werden. Das Testergebnis ermöglicht somit in verbesserter Weise eine Aussage über die Qualität der Klebeverbindung 40.

Bei dem ersten Ausführungsbeispiel wird somit ein Klebeanbindungsnachweis mittels eines Überstands 35, der einen Prüfabschnitt 60 bildet und dessen mechanische Festigkeit auf die Mindest-Adhäsionskraft der Klebung K abgestimmt ist, ermöglicht. Es wird eine einfache, schnelle Prüfung der Klebeanbindung zwischen der Oberfläche 22 des Substrats 20 und der Komponente 50 mittels des Klebefilms 30 möglich.

Der Prüfabschnitt 60 mit dem Zwischenelement 70 in Fig. 1 kann auch als ein "Process Control Specimen" oder "PCS" bezeichnet werden. In den Figuren ist jeweils einer dieser "Process Control Specimen" mit Hilfe einer gestrichelten Linie hervorgehoben. Bei dem ersten Ausführungsbeispiel sind zwei gleichartige Prüfabschnitte 60 und somit zwei "PCS" vorgesehen. Die Klebeanbindung kann also zur noch weiteren Verbesserung der Zuverlässigkeit der Prüfung zweimal getestet werden.

Bei dem ersten Ausführungsbeispiel ist die Komponente 50 als ein Laminat ausgebildet. Die Komponente 50 ist mit einem Faserverbundwerkstoff mit mehreren Laminatlagen ausgebildet. Bei dem Faserverbundwerkstoff handelt es sich bei dem ersten Ausführungsbeispiel vorzugsweise um ein faserverstärktes Kunststoffmaterial mit einer aushärtbaren Matrix und mit Verstärkungsfasern. Die Matrix kann insbesondere mit einem Epoxidharz gebildet sein, und bei den Verstärkungsfasern kann es sich insbesondere um Kohlenstofffasern oder Glasfasern handeln.

Bei dem ersten Ausführungsbeispiel wird das Substrat 20 durch Aufkleben der Komponente 50 repariert, das Substrat 20 liegt daher bereits vor Erzeugung der Klebung K ausgehärtet vor und kann bereits im Gebrauch gewesen sein.

Sowohl das Substrat 20 als auch die Komponente 50 können unter Verwendung eines vorimprägnierten Faserhalbzeugs (Prepregs) hergestellt oder alternativ zum Beispiel im Harzinfusionsverfahren mit einem trockenen Faserhalbzeug gefertigt werden bzw. worden sein. Mithin kann insbesondere die aufzuklebende Komponente 50 aus mehreren Lagen eines Prepreg gebildet sein, oder kann alternativ mit Lagen eines trockenen Faserhalbzeugs, die im Harzinfusionsverfahren getränkt werden, aufgebaut sein. Der Klebefilm 30 kann beim Auflegen desselben auf das Substrat 20 und die Zwischenelemente 70 insbesondere tiefgekühlt sein.

Eine Anordnung 110 gemäß einem zweiten Ausführungsbeispiel zeigt Fig. 2. Nachfolgend sollen die Unterschiede des zweiten gegenüber dem ersten Ausführungsbeispiel beschrieben werden, wobei darüber hinausgehend auf die obigen Ausführungen zum ersten Ausführungsbeispiel verwiesen wird.

Die Anordnung 110 weist ein Substrat 20, eine Komponente 50, zwei Zwischenelemente 70 und einen Klebefilm 130 auf. Mittels des Klebefilms 130 ist eine strukturelle Klebeverbindung 40 der Komponente 50 mit dem Substrat 20 gebildet. Auch weist die Anordnung 110 ferner zwei gleichartig ausgebildete Prüfabschnitte 160 auf. Die Prüfabschnitte 160 sind jeweils mit einem Überstand 135 des Klebefilms 130 gebildet, wobei sich jeder der Überstände 135 über einen zugeordneten Teil 52 eines Randes 51 der Komponente 50 hinaus erstreckt.

Jeder der Überstände 135 erstreckt sich mit seinem von der Komponente 50 aus gesehen distalen Ende bereichsweise über das Zwischenelement 70 und endet auf dem zugeordneten Zwischenelement 70. Zwischen dem Rand 51 und dem zugeordneten Zwischenelement 70 ist der Überstand 135 jeweils in einem Bereich 136 desselben mit dem Substrat 20 verklebt. Die Prüfabschnitte 160 enden in Fig. 2 jeweils an einem Ende 169 auf dem Zwischenelement 70.

Die Unterschiede des Klebefilms 130 gegenüber dem Klebefilm 30 werden nachfolgend erläutert. Der Klebefilm 130 weist im Bereich jedes der Überstände 135 ein Teilgebiet 132 auf. Eine Struktur des Klebefilms 130 umfasst eine interne Trägerstruktur (in den Figuren nicht dargestellt), die einen Bestandteil eines Ausgangs-Klebefilms 131, der auch das Klebemittel aufweist, bildet. Ferner umfasst die Struktur des Klebefilms 130 eine zusätzliche Verstärkungskomponente 180, die in dem Teilgebiet 132 auf den Ausgangs-Klebefilm 131 aufgebracht ist. Alternativ könnte die Verstärkungskomponente 180 in den Ausgangs-Klebefilm 131 eingebracht sein.

Bei dem zweiten Ausführungsbeispiel ist eine mechanische Festigkeit der Struktur, die die zusätzliche Verstärkungskomponente 180 umfasst, an eine vordefinierte Soll-Anbindungskraft einer mit dem Klebefilm 130 zur Bildung der Klebeverbindung 40 erzeugten Klebung K derart angepasst, dass - nach Fertigstellung der Klebung K- bei einem Abziehen des Klebefilms 130 von dem Substrat 20 mit einer schälenden Beanspruchung der Klebung K der Klebefilm 130 in einem Teilbereich 133 und bevorzugt an dessen Beginn nahe dem Rand 71 versagt, wenn die Belastbarkeit der Klebung K die Soll-Anbindungskraft erreicht oder überschreitet. Der Klebefilm 130, und insbesondere die Trägerstruktur, versagt in dem Teilbereich 133 vorzugsweise jedoch nicht, wenn die Belastbarkeit der Klebung K die Soll-Anbindungskraft nicht erreicht, sondern es kommt zu einem Abschälen im Bereich 133. Der Teilbereich 133 des Klebefilms 130 ist durch jenen Teil des Teilgebiets 132 gebildet, in dem der Überstand 135 mit dem Substrat 20 verklebt ist, siehe Fig. 2. Bei dem zweiten Ausführungsbeispiel ist somit die mechanische Festigkeit der Struktur des Klebefilms 130 im Teilgebiet 132 durch Hinzufügen der Verstärkungskomponente 180 mit vorab bestimmbarer mechanischer Festigkeit modifiziert worden, um die gewünschte Anpassung an die Soll-Anbindungskraft zu erzielen. Die Verstärkungskomponente 180 kann als eine zusätzliche Trägerkomponente angesehen werden, wobei der Klebefilm 130 dann in dem Teilgebiet 132 zwei Trägerkomponenten, die interne Trägerkomponente des Ausgangs-Klebefilms 131 und die zusätzliche Verstärkungskomponente 180, aufweist.

Bei dem zweiten Ausführungsbeispiel ist die zusätzliche Verstärkungskomponente 180 mit einem textilen Gebilde, insbesondere einem Vlies, einem Gewebe oder einem Gewirk, ausgebildet. Auch die nicht eingezeichnete interne Trägerstruktur des Ausgangs-Klebefilms 131 ist bevorzugt mit einem textilen Gebilde, insbesondere einem Vlies, einem Gewebe oder einem Gewirk, ausgebildet.

Fig. 2 zeigt ferner, dass bei dem zweiten Ausführungsbeispiel die zusätzliche Verstärkungskomponente 180 somit in einem Teilgebiet 164 des Prüfabschnitts 160 vorgesehen ist, wodurch in der vorstehend beschriebenen Weise die mechanische Festigkeit des Prüfabschnitts 160 in dem Teilgebiet 164 eingestellt wird. Das Teilgebiet 164 des Prüfabschnitts 160 endet bei dem zweiten Ausführungsbeispiel zwischen dem dem Prüfabschnitt 160 zugeordneten Zwischenelement 70 und der Komponente 50 vor Erreichen der Komponente 50 in einem Ende 165.

Mit Hilfe der Klebestrukturverstärkung durch die zusätzliche Verstärkungskomponente 180 kann somit genau festgelegt werden, welche Kraft bei der Prüfung der Klebung K vom Prüfabschnitt 160 in einem mit dem Teilgebiet 164 übereinstimmenden Teilbereich 161 des Prüfabschnitts 160 ausgehalten werden muss, um eine ausreichende Klebungsgüte nachzuweisen. Hierbei liegt eine Sollreiß- oder Sollbruchstelle S bei guter Klebung K im verstärkten Teilgebiet 164, an oder nahe dem Rand 71, und somit auch vor der Komponente 50. Falls der Prüfabschnitt 160 beim schälenden Abziehen erst am oder nach dem Ende 165 des Teilgebiets 164 dort abreißt, wo die Verstärkungskomponente 180 nicht mehr vorhanden ist, oder es gar zu einem Rißfortschritt in die Komponente 50 hinein kommt, kann auf nicht ausreichende Klebungsgüte geschlossen werden. Mit der Verstärkungskomponente 180 wird somit bewirkt, dass bei einer schlechten Klebung K der Prüfabschnitt 160 erst kurz vor der Komponente 50 abreißt oder ein Aufreißen der Klebung K bis in die Komponente 50 hinein fortgeführt wird.

In Fig. 2 überlappt das Teilgebiet 164 des Prüfabschnitts 160 mit dem zugeordneten Zwischenelement 70 abschnittsweise, wodurch sich das Teilgebiet 164 über einen Abschnitt eines Randes 71 des Zwischenelements 70 hinweg erstreckt. Die zum Abziehen des Prüfabschnitts 160 einzuleitenden Kräfte, z. B. Zugkräfte, werden somit wirkungsvoll in das verstärkte Teilgebiet 164 eingeleitet.

In Varianten des zweiten Ausführungsbeispiels könnte der Prüfabschnitt 160 durch Hinzufügen mehrerer zusätzlicher Verstärkungskomponenten 180 hinsichtlich seiner mechanischen Festigkeit passend eingestellt werden.

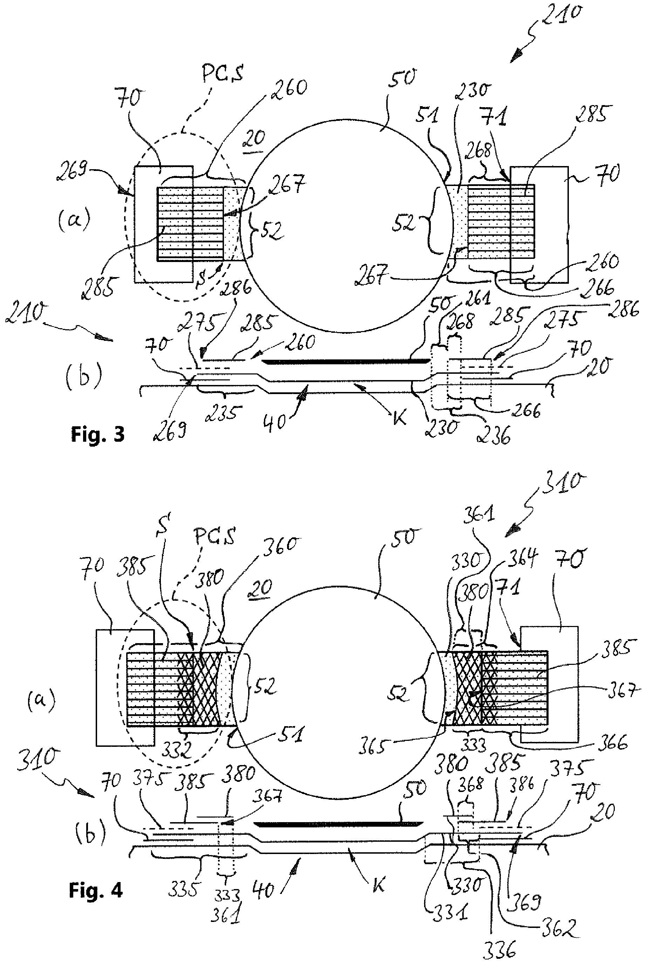

Eine Anordnung 210 gemäß einem dritten Ausführungsbeispiel zeigt Fig. 3. Nachfolgend sollen die Unterschiede des dritten gegenüber dem ersten Ausführungsbeispiel beschrieben werden, wobei darüber hinausgehend auf die obigen Ausführungen zum ersten Ausführungsbeispiel verwiesen wird.

Die Anordnung 210 weist ein Substrat 20, eine Komponente 50, zwei Zwischenelemente 70 und einen Klebefilm 230 auf. Mittels des Klebefilms 230 ist eine strukturelle Klebeverbindung 40 der Komponente 50 mit dem Substrat 20 gebildet. Die Anordnung 210 weist ferner zwei gleichartig ausgebildete Prüfabschnitte 260 auf. Die Prüfabschnitte 260 sind jeweils mit einem Überstand 235 des Klebefilms 230 gebildet, wobei sich jeder der Überstände 235 über einen Teil 52 eines Randes 51 der Komponente 50 hinaus erstreckt.

Jeder der Überstände 235 erstreckt sich mit seinem von der Komponente 50 aus gesehen distalen Ende bereichsweise über das Zwischenelement 70 und endet auf dem zugeordneten Zwischenelement 70. Zwischen dem Rand 51 und dem zugeordneten Zwischenelement 70 ist der Überstand 235 jeweils in einem Bereich 236 desselben mit dem Substrat 20 verklebt. Die Prüfabschnitte 260 enden in Fig. 3 jeweils an einem Ende 269 auf dem Zwischenelement 70.

Bei dem dritten Ausführungsbeispiel ist der Klebefilm 230 in gleicher Weise ausgebildet wie der Klebefilm 30 des ersten Ausführungsbeispiels, so dass diesbezüglich auf die obigen Ausführungen verwiesen werden kann. Der Aufbau des Prüfabschnitts 260 unterscheidet sich aber von jenem der Prüfabschnitte 60 und wird nachfolgend beschrieben.

In Fig. 3 ist auf dem Überstand 235 jeweils in einem Teilgebiet 266 des Prüfabschnitts 260 eine zusätzliche Materialschicht oder -lage 285 mit erhöhter Reißfestigkeit angeordnet. Beim Aushärten des Klebefilms 230 verklebt der Überstand 235 bereichsweise auch mit der Materialschicht 285. Wird der Prüfabschnitt 260 von dem Substrat 20 unter schälender Belastung der Klebung K abgezogen, dann reißt nach Abheben der Prüfabschnitts 260 von dem Zwischenelement 70 zunächst die Klebung K auf, wodurch das Bruchbild sichtbar wird und untersucht werden kann. Auf diese Weise wird es vorteilhaft ohne Schädigung der strukturellen Klebeverbindung 40 möglich, die Fläche zwischen Substrat 20 und Klebefilm 230 zu untersuchen sowie den Versagensmodus, unter dem die Klebung K testweise versagt, zu überprüfen und zu verifizieren, ob dieser unter gegebenen Anforderungen zulässig ist oder nicht. Indem die mechanische Festigkeit des Prüfabschnitts 260 mit Hilfe der zusätzlichen Materialschicht 285 soweit erhöht wird, dass der Prüfabschnitt 260 im Teilgebiet 266 auch unter der Maximalkraft, die bei der Prüfung aufgebracht wird, nicht durchreißt, kann in einem Teilbereich 268 des Prüfabschnitt 260, in dem der Überstand 235 mit dem Substrat 20 verklebt ist und zugleich die zusätzliche Materialschicht 285 vorliegt, ein Oberflächenbild der Abrissfläche erzeugt und nachfolgend untersucht werden.

Bei dem dritten Ausführungsbeispiel ist die zusätzliche Materialschicht 285 als eine Laminatlage mit einem faserverstärkten Kunststoffmaterial ausgebildet. Vorteilhaft ist die zusätzliche Materialschicht in gleicher Weise ausgebildet wie eine mit dem Klebefilm 230 in Kontakt kommende Lage der Komponente 50. Somit weist auch die zusätzliche Materialschicht 285 eine Matrix und Verstärkungsfasern auf, wobei die Matrix mit einem aushärtbaren Kunststoffmaterial gebildet ist und als Verstärkungsfasern beispielsweise Kohlenstofffasern oder Glasfasern vorgesehen sind. Die zusätzliche Materialschicht 285 kann somit als Verstärkungslaminatstreifen bezeichnet werden.

Analog zu dem ersten Ausführungsbeispiel ist auch bei dem dritten Ausführungsbeispiel die Komponente 50 vorzugsweise nicht oder nicht vollständig ausgehärtet. In diesem Falle ist die zusätzliche Materialschicht 285 ebenfalls nicht oder nicht vollständig ausgehärtet und liegt vor Erzeugung der Klebung K bevorzugt im gleichen Aushärtungszustand vor wie die Komponente 50. Falls in einer Variante die Komponente 50 bereits ausgehärtet ist, ist auch die zusätzliche Materialschicht 285 des dritten Ausführungsbeispiels bereits ausgehärtet.

Das Teilgebiet 266 endet mit einem Ende 267 desselben in Fig. 3 zwischen dem Zwischenelement 70 und der Komponente 50 vor Erreichen der Komponente 50. Es verbleibt zwischen dem Ende 267 und dem Rand 51 somit ein Teilbereich 261 des Prüfabschnitts 260, in dem analog zu dem oben beschriebenen ersten Ausführungsbeispiel die Klebeanbindung auf das Erreichen der Soll-Anbindungskraft hin getestet werden kann. Hierbei liegt eine Sollreiß- oder Sollbruchstelle S bei Vorliegen einer hinreichenden Anbindungskraft der Klebung K an oder nahe dem Ende 267 im Teilbereich 261. Mit dem dritten Ausführungsbeispiel können somit zwei Kriterien überprüft werden, um die Qualität der Klebung K zu beurteilen, nämlich das Erreichen der Soll-Anbindungskraft zum Einen und das Vorliegen eines zulässigen Versagensmodus zum Anderen.

In Fig. 3 überlappt das Teilgebiet 266 mit dem Zwischenelement 70 abschnittsweise und erstreckt sich hierbei über einen Abschnitt eines Randes 71 des Zwischenelements 70 hinweg. Somit wird wiederum sichergestellt, dass die Kräfte beim Abziehen des Prüfabschnitts 260 in der Weise eingeleitet werden, dass das Aufreißen der Klebung K im beabsichtigten Bereich 268 zuverlässig erfolgt und das Bruchbild untersucht werden kann.

Ferner zeigt Fig. 3 in gestrichelter Linie ein weiteres Zwischenelement 275, welches zum Beispiel als Folie, insbesondere als Trennfolie, ausgebildet und abschnittsweise zwischen dem Klebefilm 230 und der zusätzlichen Materialschicht 285 angeordnet sein kann. Im Teilbereich 268 ist die zusätzliche Materialschicht 285 auch bei dieser Variante vermittelt über den Klebefilm 230 mit dem Substrat 20 verklebt. Durch Anheben der zusätzlichen Materialschicht 285 an deren von der Komponente 50 distalen Ende 286 kann das testweise Aufreißen der Klebung K im Teilbereich 268 in alternativer Weise ausgehend von der Verbindung der zusätzlichen Materialschicht 285 mit dem Überstand 235 des Klebefilms 230 an dessen Oberseite initiiert werden. Bei einer anderen Variante des dritten Ausführungsbeispiels kann das weitere Zwischenelement 275 fehlen.

Eine Anordnung 310 gemäß einem vierten Ausführungsbeispiel ist in Fig. 4 illustriert. Nachfolgend sollen die Unterschiede des vierten gegenüber dem dritten Ausführungsbeispiel beschrieben werden, wobei darüber hinaus auf die obigen Ausführungen zu den vorangehenden Ausführungsbeispielen verwiesen wird.

Die Anordnung 310 weist ein Substrat 20, eine Komponente 50, zwei Zwischenelemente 70 und einen Klebefilm 330 auf. Mittels des Klebefilms 330 ist eine strukturelle Klebeverbindung 40 der Komponente 50 mit dem Substrat 20 gebildet. Die Anordnung 310 weist ferner zwei gleichartig ausgebildete Prüfabschnitte 360 auf. Die Prüfabschnitte 360 sind jeweils mit einem Überstand 335 des Klebefilms 330 gebildet, wobei sich jeder der Überstände 335 über einen Teil 52 eines Randes 51 der Komponente 50 hinaus erstreckt.

Jeder der Überstände 335 erstreckt sich mit seinem von der Komponente 50 aus gesehen distalen Ende bereichsweise über das Zwischenelement 70 und endet auf dem zugeordneten Zwischenelement 70. Zwischen dem Rand 51 und dem zugeordneten Zwischenelement 70 ist der Überstand 335 jeweils in einem Bereich 336 desselben mit dem Substrat 20 verklebt. Die Prüfabschnitte 360 enden in Fig. 4 jeweils an einem Ende 369 auf dem Zwischenelement 70.

Der Klebefilm 330 der Fig. 4 umfasst einem Ausgangs-Klebefilm 331. Eine Struktur des Klebefilms 330 umfasst eine interne Trägerstruktur (in den Figuren wiederum nicht dargestellt) des Ausgangs-Klebefilms 331. Der Klebefilm 330 weist ferner ein Klebemittel auf, das insbesondere mit einem Epoxidharz gebildet ist und Teil des Ausgangs-Klebefilms 331 ist.

In einem Teilgebiet 332 des Klebefilms 330 im Bereich jeweils eines der Überstände 335 ist eine zusätzliche Verstärkungskomponente 380 auf den Ausgangs-Klebefilm 331 aufgebracht, wobei in Fig. 4 die Verstärkungskomponenten 380 jeweils nur in einem Teilbereich 333, der einen Teil des Teilgebiets 332 bildet, mit dem Ausgangs-Klebefilm 331 in Kontakt stehen. Die zusätzliche Verstärkungskomponente 380 ist mit einem textilen Gebilde, insbesondere einem Vlies, einem Gewebe oder einem Gewirk, ausgebildet. Auch die nicht eingezeichnete interne Trägerstruktur des Ausgangs-Klebefilms 331 ist bevorzugt mit einem textilen Gebilde, insbesondere einem Vlies, Gewebe oder Gewirk, ausgebildet.

Bei dem vierten Ausführungsbeispiel ist die zusätzliche Verstärkungskomponente 380 somit in einem ersten Teilgebiet 364 des Prüfabschnitts 360 vorgesehen. Das erste Teilgebiet 364 endet zwischen dem dem Prüfabschnitt 360 zugeordneten Zwischenelement 70 und der Komponente 50 vor Erreichen der Komponente 50 in einem Ende 365.

Auf dem Überstand 335 der Fig. 4 ist ferner jeweils in einem zweiten Teilgebiet 366 des Prüfabschnitts 360 eine zusätzliche Materialschicht 385 mit erhöhter Reißfestigkeit angeordnet. Beim Aushärten des Klebefilms 330 verklebt der Überstand 335 bereichsweise, in einem Teilbereich 362 des Prüfabschnitts 360, auch mit der Materialschicht 385. Die zusätzliche Materialschicht 385 ist analog der Materialschicht 285 des dritten Ausführungsbeispiels ausgebildet, so dass auf die obigen Ausführungen verwiesen werden kann, auch mit Blick auf den Aushärtungszustand der Materialschicht 385.

Das zweite Teilgebiet 366 endet mit einem Ende 367 zwischen dem Zwischenelement 70 und der Komponente 50. Das erste Teilgebiet 364 überlappt mit dem zweiten Teilgebiet 366 des Prüfabschnitts 360 in einem Überlappungsbereich 368, erstreckt sich über das Ende 367 des zweiten Teilgebiets 366 hinweg und endet mit dem Ende 365 zwischen dem Ende 367 und der Komponente 50 vor Erreichen der Komponente 50.

Bei dem vierten Ausführungsbeispiel ist eine mechanische Festigkeit einer Struktur, die die zusätzliche Verstärkungskomponente 380 sowie die interne Trägerstruktur des Ausgangs-Klebefilms 331 umfasst, an eine vordefinierte Soll-Anbindungskraft einer mit dem Klebefilm 330 zur Bildung der Klebeverbindung 40 erzeugten Klebung K derart angepasst, dass - nach Fertigstellung der Klebung K - bei einem Abziehen des Klebefilms 330 von dem Substrat 20 mit einer schälenden Beanspruchung der Klebung K der Klebefilms 330 in dem Teilbereich 333, der zwischen den Enden 365 und 367 liegt, versagt, wenn die Belastbarkeit der Klebung K die Soll-Anbindungskraft erreicht oder überschreitet, und in dem Teilbereich 333 nicht versagt, wenn die Belastbarkeit der Klebung K die Soll-Anbindungskraft nicht erreicht. Insbesondere kann hierbei die Struktur des Klebefilms 330 bei Erreichen oder Überschreiten der Soll-Anbindungskraft im Teilbereich 333 versagen. Mit anderen Worten, im Falle einer Klebung K guter Qualität reißt der Prüfabschnitt 360 an einer Sollreißstelle S am Ende 367 der zusätzlichen Materialschicht 385 im verstärkten ersten Teilgebiet 364 ab. Ist die Qualität der Klebung K hingegen nicht ausreichend, dann reißt der Prüfabschnitt 360 am Ende oder außerhalb des Teilbereichs 333 ab, beispielsweise kurz vor der Komponente 50.

Zwischen dem Ende 367 und dem Rand 51 befindet sich somit ein Teilbereich 361 des Prüfabschnitts 360, der räumlich mit dem Teilbereich 333 zusammenfällt und in dem analog zu dem oben beschriebenen zweiten Ausführungsbeispiel die Klebeanbindung auf das Erreichen der Soll-Anbindungskraft hin getestet werden kann. Hierbei dient das Hinzufügen der zusätzlichen Verstärkungskomponente 380 der Modifikation der mechanischen Festigkeit der Struktur des Klebefilms 330 zur Einstellung der mechanische Festigkeit des Prüfabschnitts 360 im Teilbereich 361.

Wenn der Prüfabschnitt 360 von dem Substrat 20 unter schälender Belastung der Klebung K abgezogen wird, dann reißt nach Abheben der Prüfabschnitts 360 von dem Zwischenelement 70 analog dem dritten Ausführungsbeispiel zunächst die Klebung K zwischen dem Rand 71 und dem Ende 367 im Teilbereich 362 auf, wodurch wiederum das Bruchbild erkennbar wird.

Das zweite Teilgebiet 366 überlappt ferner abschnittsweise mit dem Zwischenelement 70 und erstreckt sich hierbei über einen Abschnitt eines Randes 71 des Zwischenelements 70 hinweg. Auch bei dem vierten Ausführungsbeispiel wird somit sichergestellt, dass die Kräfte, z. B. Zugkräfte, beim Abziehen des Prüfabschnitts 360 in der Weise eingeleitet werden, dass das Aufreißen der Klebung K im beabsichtigten Bereich 362 zwischen dem Rand 71 und dem Ende 367 zuverlässig erfolgt und das Bruchbild untersucht werden kann.

Auch das vierte Ausführungsbeispiel ermöglicht somit die Beurteilung der Qualität der Klebung K anhand der Anbindungskraft und anhand des Bruchbildes, wobei die Verstärkungskomponente 380 ein weiter verbesserte Anpassung an die Soll-Anbindungskraft bietet.

Darüber hinaus zeigt Fig. 4 in gestrichelter Linie ein weiteres Zwischenelement 375, welches zum Beispiel als Folie, insbesondere als Trennfolie, ausgebildet und abschnittsweise zwischen dem Klebefilm 330 und der zusätzlichen Materialschicht 385 angeordnet sein kann. In dem der Komponente 50 zugewandten Bereich 362 zwischen dem Rand 71 und dem Ende 367 ist die zusätzliche Materialschicht 385 auch bei dieser Variante vermittelt über den Klebefilm 330 mit dem Substrat 20 verklebt. Durch Anheben der zusätzlichen Materialschicht 385 an deren von der Komponente 50 distalen Ende 386 kann das testweise Aufreißen der Klebung K analog zu dem dritten Ausführungsbeispiel in alternativer Weise ausgehend von der Verbindung der zusätzlichen Materialschicht 385 mit dem Überstand 335 des Klebefilms 330 an dessen Oberseite initiiert werden. Bei einer anderen Variante kann das weitere Zwischenelement 375 fehlen.

In Fig. 6 ist eine Anordnung 410 gemäß einem fünften Ausführungsbeispiel dargestellt. Die Anordnung 410 unterscheidet sich von der Anordnung 10 gemäß dem ersten Ausführungsbeispiel darin, dass bei dem fünften Ausführungsbeispiel das Substrat 20 nicht durch einen materialabtragenden Bearbeitungsvorgang mit einer Eintiefung zu Aufnahme der Komponente 450 versehen wurde, und ferner darin, dass die Komponente 450 der Fig. 6 ohne randseitige Schäftung oder Abschrägung ausgebildet ist. Fig. 6 illustriert eine geplante Klebeverbindung 440 der Komponente 450 mit dem Substrat 20. Darüber hinausgehend ist die Anordnung 410 wie die Anordnung 10 des ersten Ausführungsbeispiels ausgebildet. Es versteht sich, dass auch die Ausführungsbeispiele der Fig. 2, 3 und 4 in Varianten jeweils analog dem fünften Ausführungsbeispiel für eine geplante Klebeverbindung Anwendung finden können.

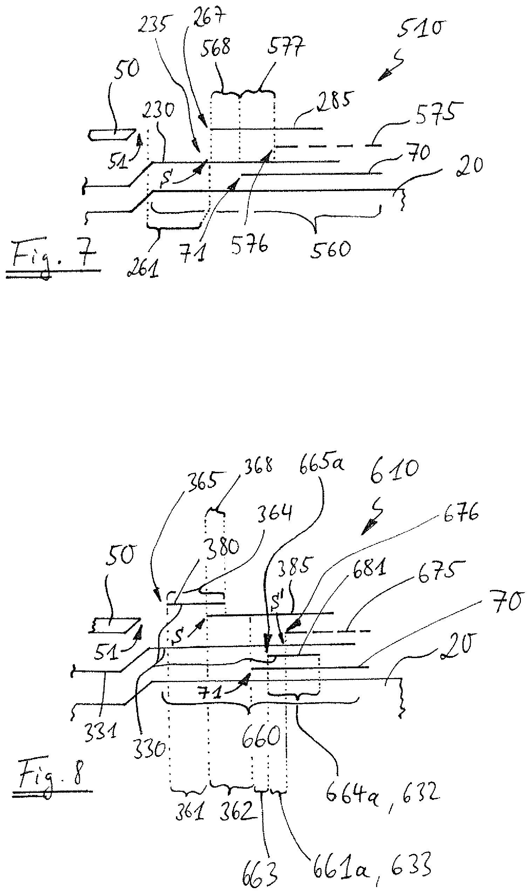

Fig. 7 illustriert schematisch eine Anordnung 510 gemäß einem sechsten Ausführungsbeispiel, bei welchem es sich um eine Variante des dritten Ausführungsbeispiels handelt. Nachfolgend sollen die Unterschiede gegenüber dem dritten Ausführungsbeispiel beschrieben werden. Darüber hinausgehend wird auf die obigen Ausführungen zum dritten Ausführungsbeispiel verwiesen.

In Fig. 7 ist anstelle des weiteren Zwischenelements 275 ein weiteres Zwischenelement 575 vorgesehen, welches wiederum bevorzugt als eine Trennfolie ausgebildet ist und sich von dem Zwischenelement 275 nur darin unterscheidet, dass ein der Komponente 50 zugewandter Rand 576 des weiteren Zwischenelements 575 einen größeren Abstand von der Komponente 50 aufweist als der der Komponente 50 zugewandte Rand 71 des Zwischenelements 70.

In einem Teilbereich 568 des Prüfabschnitts 560 ist wie im Teilbereich 268 der Fig. 3 der Überstand 235 mit dem Substrat 20 verklebt, wobei zugleich die zusätzliche Materialschicht 285 vorliegt und wiederum ein Oberflächenbild der Abrissfläche erzeugt und nachfolgend untersucht werden kann. Jedoch ist bei dem sechsten Ausführungsbeispiel der Überstand 235 in einem an den Teilbereich 568 anschließenden Teilbereich 577 zwischen dem Rand 71 und dem Rand 576 mit der zusätzlichen Materialschicht 285 verklebt, jedoch nicht mit dem Substrat 20.

Bei dem sechsten Ausführungsbeispiel kann auch die Klebeanbindung zwischen dem Klebefilm 230 und der oben aufgelegten zusätzlichen Materialschicht 285 überprüft werden, um eine Aussage über die Klebeanbindung zwischen Klebefilm 230 und Komponente 50 zu gewinnen. Hierzu wird bei dem sechsten Ausführungsbeispiel in folgender Weise vorgegangen. Zuerst löst man das "Paket" des Klebefilms 230, des weiteren Zwischenelements 575 und der zusätzlichen Materialschicht 285 von dem in Fig. 7 unteren Zwischenelement 70 ab und schält es ab wie zu Fig. 3 beschrieben. Der Prüfabschnitt 560 ist derart ausgebildet, dass er bei einer guten Klebeanbindung zwischen dem Klebefilm 230 und dem Substrat 20 dann an der Sollbruchstelle S an oder nahe dem der Komponente 50 zugewandten Ende 267, also nahe dem der Komponente 50 zugewandten Ende der zusätzlichen Materialschicht 285, abreißt.

Der abgerissene Teil des Prüfabschnitts 560 beinhaltet nun auch zumindest den Teilbereich 577, in dem der Klebefilm 230 mit der zusätzlichen Materialschicht 285 verklebt ist. Nun wird dieses "Restpaket" an der oberen Trennfolie 275 auseinandergelöst. Hierbei wird der Klebefilm 230, dessen mechanische Festigkeit analog dem oben Beschriebenen an die zu prüfende Klebeanbindung angepasst ist, von der zusätzlichen Materialschicht 285 abgeschält. Analog zu dem Zwischenelement 70 erleichtert das Zwischenelement 575 das Ablösen und Greifen des Klebefilms 230 beim Abschälen desselben von der zusätzlichen Materialschicht 285. Zur Erleichterung kann der abgerissene Teil des Prüfabschnitts 560 hierfür umgedreht werden.

Je nachdem, ob der Prüfabschnitt 560 dann abreißt oder die Klebung zwischen Klebefilm 230 und der zusätzlichen Materialschicht 285 weiter aufreißt, können vorteilhaft auch Rückschlüsse auf die Klebeanbindung zu der zusätzlichen Materialschicht 285 getroffen werden. Dies ist von besonderem Vorteil, wenn die Komponente 50, etwa ein Reparatur-"Patch" oder ein Bauteil, und auch die zusätzliche Materialschicht 285 bereits vor der Verklebung mit dem Substrat 20 ausgehärtet und ggf. mit einer entsprechenden Oberflächenvorbehandlung versehen worden sind. In einem solchen Fall kann mittels des sechsten Ausführungsbeispiels eine nützliche Kontrollprobe für die Anbindung zwischen Klebefilm 230 und Komponente 50 und auch für den Effekt einer eventuellen Vorbehandlung der Komponente 50 geschaffen werden.

Fig. 8 illustriert schematisch eine Anordnung 610 gemäß einem siebten Ausführungsbeispiel, bei welchem es sich um eine Variante des vierten Ausführungsbeispiels handelt, bei dem analog dem sechsten Ausführungsbeispiel ein weiteres Zwischenelement 675 vorgesehen ist. Es wird auf die obigen Erläuterungen zum vierten und sechsten Ausführungsbeispiel sowie zum Zwischenelement 575 verwiesen. Auch das siebte Ausführungsbeispiel ermöglicht die Prüfung der Klebeanbindung zwischen der zusätzlichen Materialschicht 385 und dem Klebefilm 330.

Gemäß dem siebten Ausführungsbeispiel ist eine weitere Verstärkungkomponente 681 vorgesehen. Hinsichtlich Ausbildung der Verstärkungskomponente 681 und deren Wirkung auf die mechanische Festigkeit des Klebefilms 330 bzw. des Prüfabschnitts 660 wird auf die obigen Ausführungen zu den Verstärkungskomponenten 180 und 380 verwiesen.

Die zusätzliche Verstärkungskomponente 681 ist in Fig. 8 zwischen dem in der Figur unteren Zwischenelement 70 und dem Klebefilm 330 in einem dritten Teilgebiet 664a des Prüfabschnitts 660, entsprechend einem Teilgebiet 632 des Klebefilms 330, angeordnet. Die bereits zu Fig. 4 beschriebene Verstärkungskomponente 380 ist in dem ersten Teilgebiet 364 mit dem Ende 365 angeordnet, wobei das erste Teilgebiet 364 in Fig. 8 ein Teilgebiet des Prüfabschnitts 660 bildet.

Die zusätzliche Verstärkungskomponente 681 endet an einem der Komponente 50 zugewandten Ende 665a des dritten Teilgebiets 664a zwischen dem der Komponente 50 zugewandten Rand 71 des Zwischenelements 70 und dem der Komponente 50 zugewandten Rand 676 des weiteren Zwischenelements 675. In einem Teilbereich 661a des Prüfabschnitts 660, entsprechend einem Teilbereich 633 des Klebefilms 330, zwischen dem Ende 665a und dem Rand 676 ist somit der Klebefilm 330 mittels der zusätzlichen Verstärkungskomponente 681 verstärkt und zudem mit der zusätzlichen Materialschicht 385 verklebt. In dem Teilbereich 661a, 633 ist die mechanische Festigkeit des Prüfabschnitts 660 an die Sollanbindungskraft der Klebung zwischen dem Klebefilm 330 und der zusätzlichen Materialschicht 385 angepasst. In einem Teilbereich 663 zwischen dem Ende 665a und dem Rand 71 ist der Klebefilm 330 jedoch nicht durch die zusätzliche Verstärkungskomponente 681 verstärkt.

Somit beeinflusst bei dem siebten Ausführungsbeispiel die zusätzliche Verstärkungskomponente 681 die Prüfung in den Teilbereichen 361 und 362 nicht. Mit dem siebten Ausführungsbeispiel kann aber nach dem Abreißen des Prüfabschnitts 660 und Umdrehen desselben wie oben beschrieben durch Abziehen des Klebefilms 330 mit der Verstärkungskomponente 681 von der zusätzlichen Materialschicht 385 ein Nachweis für die Klebeanbindung in Richtung der zusätzlichen Materialschicht 385 ermöglicht werden. Die mechanische Festigkeit des Prüfabschnitts 660 ist in dem Teilbereich 661a, 633 derart angepasst, dass bei guter Klebeanbindung zwischen dem Klebefilm 330 und der zusätzlichen Materialschicht 385 der Prüfabschnitt 660 im Teilbereich 661a, 633 abreißt, vorzugsweise an einer Sollbruchstelle S' an oder nahe dem Rand 676 des weiteren Zwischenelements 675, jedoch im Teilbereich 661a, 633 nicht abreißt, wenn diese Klebeanbindung nicht die erforderliche Anbindungskraft aufweist. Auch das siebte Ausführungsbeispiel kann vorteilhaft Anwendung in Fällen finden, in denen die Komponente 50 und die zusätzliche Materialschicht 385 bereits ausgehärtet sind.

Es versteht sich, dass die Ausführungsbeispiele der Fig. 7 und 8 in Varianten jeweils analog dem fünften Ausführungsbeispiel für eine geplante Klebeverbindung vorteilhafte Anwendung finden können, wobei dann in den Fig. 7, 8 die Komponente 450 der Fig. 6 anstelle der Komponente 50 mit dem Substrat 20 verklebt werden kann.

Das Abziehen des Prüfabschnitts 160, 260, 360 bzw. 60 bei den Ausführungsbeispielen der Fig. 2, 3, 4, 6, 7 und 8 kann jeweils analog zu dem Abziehen bei dem ersten Ausführungsbeispiel erfolgen, beispielsweise unter Verwendung der Walzvorrichtung 91, wie zu Fig. 5 erläutert.

Das Substrat 20 liegt bei allen vorstehend beschriebenen Ausführungsbeispielen vor Ausführung der Klebung K als ein bereits ausgehärtetes Faserverbundbauteil vor. Alternativ könnte jedoch stattdessen in Varianten im Falle der Herstellung einer geplanten Klebebaugruppe das Substrat 20 noch unausgehärtet oder nicht vollständig ausgehärtet vorliegen und ein weiteres Aushärten desselben beispielsweise während des Aushärtens des Klebefilms 30, 130, 230 bzw. 330 erfolgen.

Bei einigen Varianten der vorstehend beschriebenen Ausführungsbeispiele kann es vorzuziehen sein, die Komponente 50 und das Substrat 20 aufgrund ihres Aushärtungszustandes einer Vorbereitung der Klebeoberflächen, beispielsweise durch Anschleifen, Abziehen eines zuvor aufgebrachten Abziehgewebes ("Peel ply"), Sandstrahlen oder Plasmaaktivierung zu unterziehen, insbesondere wenn die Komponente 50 und das Substrat 20 beide ausgehärtet sind. Bei diesen Varianten wird die Vorbereitung der Klebeoberflächen in gleicher Weise auch für die ggf. vorhandene, insbesondere ausgehärtete, zusätzliche Materialschicht 285 oder 385 und auch für den Bereich, in dem der Überstand 35, 135, 235 bzw. 335 mit dem Substrat 20 verklebt wird, vorgenommen.

Im Falle einer geplanten Klebeverbindung, wie etwa in Fig. 6, kann es vorkommen, dass die Komponente 450 bereits ausgehärtet ist und teilweise das Substrat 20 noch nicht oder noch nicht voll ausgehärtet ist. Bei der Prüfung, ob die Klebeanbindung hinreichend gut ist, ist es besonders vorteilhaft, wenn gerade die Klebeanbindung an bereits ausgehärtete Elemente, die ggf. einer Oberflächenvorbehandlung unterzogen wurden, zuverlässig überprüft werden kann. Die Verwendung einer zusätzlichen Materialschicht 285 oder 385, wie oben zu den Fig. 3, 4, 7 und 8 beschrieben, ist in einem solchen Falle besonders nützlich und sowohl in Fällen, bei denen eine Schäftung der Komponente 50 vorliegt, als auch in Fällen einer geplanten Klebung ohne Schäftung, wie zu Fig. 6 beispielhaft erläutert, anwendbar.

Zudem können insbesondere die vorstehend beschriebenen ersten bis vierten Ausführungsbeispiele bei der Reparatur von Faserverbundbauteilen von Luft- oder Raumfahrzeugen zum Einsatz kommen. Wird die Oberfläche des dann z. B. als Faserverbundbauteil etwa eines Flugzeugs vorliegenden Substrats 20 vor der Klebung zum Beispiel materialabtragend zur Entfernung eines Blitzschutzes in Form eines Kupfernetzes durch Abschleifen bearbeitet, dann wird der Materialabtrag bevorzugt in gleicher Weise auch dort auf dem Substrat 20 durchgeführt, wo der Überstand 35, 135, 235 bzw. 335 mit dem Substrat 20 verklebt wird. Auf diese Weise kann vermieden werden, dass die Klebung K im Bereich der Komponente 50 und im Bereich der Prüfabschnitte 60, 160, 260, 360 unterschiedlich ausfällt.

Obwohl die Erfindung vorstehend anhand bevorzugter Ausführungsbeispiele vollständig beschrieben wurde, ist sie nicht darauf beschränkt, sondern in vielfältiger Art und Weise modifizierbar.

Insbesondere ist die Erfindung zwar im Zusammenhang mit Klebeverbindungen mit einer oder mehreren Faserverbundkomponenten oder -elementen nützlich, aber auch auf Klebeverbindungen anderer Klebepartner anwendbar.

### Bezugszeichenliste

- 10: Anordnung
- 20: Substrat
- 21: Gebiet
- 22: Oberfläche
- 30: Klebefilm
- 35: Überstand
- 36: Bereich (Überstand)
- 40: Klebeverbindung
- 50: Komponente
- 51: Rand (Komponente)
- 52: Teil (Rand)
- 60: Prüfabschnitt
- 69: Ende (Prüfabschnitt)
- 70: Zwischenelement
- 71: Rand (Zwischenelement)
- 72: Abstand
- 90: Walzvorrichtung
- 91: Walzenkörper
- 110: Anordnung
- 130: Klebefilm
- 131: Ausgangs-Klebefilm
- 132: Teilgebiet (Klebefilm)
- 133: Teilbereich (Klebefilm)
- 135: Überstand
- 136: Bereich (Überstand)
- 160: Prüfabschnitt
- 161: Teilbereich (Prüfabschnitt)
- 164: Teilgebiet (Prüfabschnitt)
- 165: Ende (Teilgebiet)
- 169: Ende (Prüfabschnitt)
- 180: Verstärkungskomponente
- 210: Anordnung
- 230: Klebefilm
- 235: Überstand
- 236: Bereich (Überstand)
- 260: Prüfabschnitt
- 261: Teilbereich (Prüfabschnitt)
- 266: Teilgebiet (Prüfabschnitt)
- 267: Ende (Teilgebiet)
- 268: Teilbereich (Prüfabschnitt)
- 269: Ende (Prüfabschnitt)
- 275: weiteres Zwischenelement
- 285: zusätzliche Materialschicht
- 286: Ende (zusätzliche Materialschicht)
- 310: Anordnung
- 330: Klebefilm
- 331: Ausgangs-Klebefilm
- 332: Teilgebiet (Klebefilm)
- 333: Teilbereich (Klebefilm)
- 335: Überstand
- 336: Bereich (Überstand)
- 360: Prüfabschnitt
- 361: Teilbereich (Prüfabschnitt)
- 362: Teilbereich (Prüfabschnitt)
- 364: erstes Teilgebiet (Prüfabschnitt)
- 365: Ende (erstes Teilgebiet)
- 366: zweites Teilgebiet (Prüfabschnitt)
- 367: Ende (zweites Teilgebiet)
- 368: Überlappungsbereich
- 369: Ende (Prüfabschnitt)
- 375: weiteres Zwischenelement
- 380: Verstärkungskomponente
- 385: zusätzliche Materialschicht
- 386: Ende (zusätzliche Materialschicht)
- 410: Anordnung
- 440: Klebeverbindung
- 450: Komponente
- 510: Anordnung
- 560: Prüfabschnitt
- 568: Teilbereich (Prüfabschnitt)
- 575: weiteres Zwischenelement
- 576: Rand (weiteres Zwischenelement)
- 577: Teilbereich (Prüfabschnitt)
- 610: Anordnung
- 633: Teilbereich (Klebefilm)
- 660: Prüfabschnitt
- 661a: Teilbereich (Prüfabschnitt)
- 663: Teilbereich (Prüfabschnitt)
- 664a: drittes Teilgebiet (Prüfabschnitt)
- 665a: Ende (drittes Teilgebiet)
- 675: weiteres Zwischenelement
- 676: Rand (weiteres Zwischenelement)
- 681: weitere Verstärkungskomponente
- K: Klebung
- PCS: Process Control Specimen
- R: Rotation
- S: Sollreiß- oder Sollbruchstelle bei guter Klebung
- S': weitere Sollreiß- oder Sollbruchstelle bei guter Klebung

## Patentansprüche

1. Klebefilm (30; 130; 230; 330) für eine strukturelle Klebeverbindung (40; 440) mit einem Substrat (20),
wobei der Klebefilm (30; 130; 230; 330) eine Struktur aufweist, die als eine Trägerstruktur des Klebefilms (30; 130; 230; 330) ausgebildet ist, wobei die Trägerstruktur mit einem textilen Gebilde ausgebildet ist;
wobei der Klebefilm (30; 130; 230; 330) ein aushärtbares Klebemittel aufweist, welches ein Epoxidharz Z beinhaltet;
und wobei mindestens in einem Teilbereich (133; 333; 333, 633) des Klebefilms (30; 130; 230; 330) eine mechanische Festigkeit der Struktur derart an eine vordefinierte Soll-Anbindungskraft einer unter Verwendung des Klebefilms (30; 130; 230; 330) erzeugten Klebung (K) angepasst ist, dass nach Fertigstellung der Klebung (K) bei einem Abziehen des Klebefilms (30; 130; 230; 330) von dem Substrat (20) oder von einer Materialschicht (285; 385) mit einer schälenden Beanspruchung der Klebung (K) zur Überprüfung der Klebeanbindung an das Substrat (20) oder an die Materialschicht (285; 385) der Klebefilm (30; 130; 230; 330) unter Überschreiten der mechanischen Festigkeit der Struktur versagt, wenn die Belastbarkeit der Klebung (K) die Soll-Anbindungskraft erreicht oder überschreitet, und der Klebefilm (30; 130; 230; 330) bei dem Abziehen mindestens in dem Teilbereich (133; 333; 333, 633) nicht versagt, wenn die Belastbarkeit der Klebung (K) die Soll-Anbindungskraft nicht erreicht;
**dadurch gekennzeichnet, dass** mindestens in einem Teilgebiet (132; 332; 332, 632) des Klebefilms (130; 330) die Struktur mit einer zusätzlichen Verstärkungskomponente (180; 380; 380, 681) ausgebildet ist, wobei die zusätzliche Verstärkungskomponente (180; 380; 380, 681) zur Bildung des Klebefilms (130; 330) in den Ausgangs-Klebefilm (131; 331) eingebracht ist und wobei die zusätzliche Verstärkungskomponente (180; 380; 380, 681) mit einem textilen Gebilde ausgebildet ist, und dass die an die Soll-Anbindungskraft angepasste mechanische Festigkeit eine mechanische Festigkeit der Struktur einschließlich der zusätzlichen Verstärkungskomponente (180; 380; 380, 681) ist.

2. Anordnung (10; 110; 210; 310; 410; 510; 610) zur Überprüfung einer Klebeanbindung, aufweisend ein Substrat (20), eine mit dem Substrat (20) mittels eines Klebefilms (30; 130; 230; 330) zur Bildung einer strukturellen Klebeverbindung (40; 440) verklebte Komponente (50; 450), und mindestens einen Prüfabschnitt (60; 160; 260; 360; 560; 660);
wobei der Prüfabschnitt (60; 160; 260; 360; 560; 660) mit einem sich mindestens über einen Teil (52) eines Randes (51) der mit dem Substrat (20) verklebten Komponente (50; 450) hinaus erstreckenden Überstand (35; 135; 235; 335) des Klebefilms (30; 130; 230; 330) ausgebildet ist und der Überstand (35; 135; 235; 335) bereichsweise mit dem Substrat (20) verklebt ist;
wobei eine mechanische Festigkeit des Prüfabschnitts (60; 160; 260; 360; 560; 660) mindestens in einem Teilbereich (161; 261; 361) des Prüfabschnitts (60; 160; 260; 360; 560; 660) derart an eine vordefinierte Soll-Anbindungskraft einer unter Verwendung des Klebefilms (30; 130; 230; 330) erzeugten Klebung (K) angepasst ist, dass nach Fertigstellung der Klebung (K) bei einem Abziehen des Prüfabschnitts (60; 160; 260; 360; 560; 660) von dem Substrat (20) mit einer schälenden Beanspruchung der Klebung (K) der Prüfabschnitt (60; 160; 260; 360; 560; 660) unter Überschreiten der mechanischen Festigkeit desselben abreißt, wenn die Belastbarkeit der Klebung (K) die Soll-Anbindungskraft erreicht oder überschreitet, und der Prüfabschnitt (60; 160; 260; 360; 560; 660) bei dem Abziehen mindestens in dem Teilbereich (161; 261; 361) nicht abreißt, wenn die Belastbarkeit der Klebung (K) die Soll-Anbindungskraft nicht erreicht.

3. Anordnung nach Anspruch 2,
wobei der Klebefilm (30; 130; 230; 330) eine Struktur aufweist und mindestens in dem Teilbereich (161; 261; 361) des Prüfabschnitts (60; 160; 260; 360; 560; 660) eine mechanische Festigkeit der Struktur derart an die Soll-Anbindungskraft der unter Verwendung des Klebefilms (30; 130; 230; 330) erzeugten Klebung (K) angepasst ist, dass bei dem Abziehen des Prüfabschnitts (60; 160; 260; 360; 560; 660) der Klebefilm (30; 130; 230; 330) unter Überschreiten der mechanischen Festigkeit der Struktur versagt, wenn die Belastbarkeit der Klebung (K) die Soll-Anbindungskraft erreicht oder überschreitet, und der Klebefilm (30; 130; 230; 330) bei dem Abziehen mindestens in dem Teilbereich (161; 261; 361) nicht versagt, wenn die Belastbarkeit der Klebung (K) die Soll-Anbindungskraft nicht erreicht.

4. Anordnung nach Anspruch 2 oder 3, **dadurch gekennzeichnet, dass** die Anordnung (10; 110; 210; 310; 410; 510; 610) ferner ein Zwischenelement (70), welches von dem Rand (51) der mit dem Substrat (20) verklebten Komponente (50; 450) beabstandet angeordnet ist, aufweist und dass der Überstand (35; 135; 235; 335) sich derart bereichsweise über das Zwischenelement (70) erstreckt, dass sich das Zwischenelement (70) bereichsweise zwischen dem Überstand (35; 135; 235; 335) und dem Substrat (20) befindet, wobei der Überstand (35; 135; 235; 335) zwischen dem Rand (51) der mit dem Substrat (20) verklebten Komponente (50; 450) und dem Zwischenelement (70) mit dem Substrat (20) verklebt ist, und vorzugsweise wobei der Überstand (35; 135; 235; 335) von dem Zwischenelement (70) leicht ablösbar ist.

5. Anordnung nach einem der Ansprüche 2 bis 4, **dadurch gekennzeichnet, dass** mindestens in einem ersten Teilgebiet (164; 364) des Prüfabschnitts (160; 360; 660) eine zusätzliche Verstärkungskomponente (180; 380) vorgesehen ist.

6. Anordnung nach Anspruch 4, **dadurch gekennzeichnet, dass** mindestens in einem ersten Teilgebiet (164; 364) des Prüfabschnitts (160; 360; 660) eine zusätzliche Verstärkungskomponente (180; 380) vorgesehen ist; und dass
das erste Teilgebiet (164; 364) zwischen dem Zwischenelement (70) und der mit dem Substrat (20) verklebten Komponente (50) vor Erreichen der mit dem Substrat (20) verklebten Komponente (50) endet und/oder
das erste Teilgebiet (164) mit dem Zwischenelement (70) zumindest abschnittsweise überlappt und sich über einen Abschnitt eines Randes (71) des Zwischenelements (70) hinweg erstreckt.

7. Anordnung nach einem der Ansprüche 2 bis 6, **dadurch gekennzeichnet, dass** in einem zweiten Teilgebiet (266; 366) des Prüfabschnitts (260; 360) auf dem Überstand (235; 335) eine zusätzliche Materialschicht (285; 385) mit erhöhter Reißfestigkeit angeordnet ist.

8. Anordnung nach Anspruch 4, **dadurch gekennzeichnet, dass** in einem zweiten Teilgebiet (266; 366) des Prüfabschnitts (260; 360) auf dem Überstand (235; 335) eine zusätzliche Materialschicht (285; 385) mit erhöhter Reißfestigkeit angeordnet ist und dass das zweite Teilgebiet (266; 366) zwischen dem Zwischenelement (70) und der mit dem Substrat (20) verklebten Komponente (50) vor Erreichen der mit dem Substrat (20) verklebten Komponente (50) endet, und insbesondere dass das zweite Teilgebiet (266; 366) mit dem Zwischenelement (70) zumindest abschnittsweise überlappt und sich über einen Abschnitt eines Randes (71) des Zwischenelements (72) hinweg erstreckt.

9. Anordnung nach Anspruch 8, **dadurch gekennzeichnet, dass** mindestens in einem ersten Teilgebiet (164; 364) des Prüfabschnitts (160; 360; 660) eine zusätzliche Verstärkungskomponente (180; 380) vorgesehen ist.

10. Anordnung nach Anspruch 6, **dadurch gekennzeichnet, dass** in einem zweiten Teilgebiet (266; 366) des Prüfabschnitts (260; 360) auf dem Überstand (235; 335) eine zusätzliche Materialschicht (285; 385) mit erhöhter Reißfestigkeit angeordnet ist und dass das zweite Teilgebiet (266; 366) zwischen dem Zwischenelement (70) und der mit dem Substrat (20) verklebten Komponente (50) vor Erreichen der mit dem Substrat (20) verklebten Komponente (50) endet, und insbesondere dass das zweite Teilgebiet (266; 366) mit dem Zwischenelement (70) zumindest abschnittsweise überlappt und sich über einen Abschnitt eines Randes (71) des Zwischenelements (72) hinweg erstreckt.

11. Anordnung nach Anspruch 5 oder 6, **dadurch gekennzeichnet, dass** in einem zweiten Teilgebiet (266; 366) des Prüfabschnitts (260; 360) auf dem Überstand (235; 335) eine zusätzliche Materialschicht (285; 385) mit erhöhter Reißfestigkeit angeordnet ist und dass das erste Teilgebiet (364) mit dem zweiten Teilgebiet (366) abschnittsweise überlappt, das erste Teilgebiet (364) sich über ein Ende (367) des zweiten Teilgebiets (366) hinweg erstreckt und das erste Teilgebiet (364) zwischen dem Ende (367) des zweiten Teilgebiets (366) und der aufgeklebten Komponente (50) vor Erreichen der aufgeklebten Komponente (50) endet.

12. Anordnung nach Anspruch 9 oder 10, **dadurch gekennzeichnet, dass** das erste Teilgebiet (364) mit dem zweiten Teilgebiet (366) abschnittsweise überlappt, das erste Teilgebiet (364) sich über ein Ende (367) des zweiten Teilgebiets (366) hinweg erstreckt und das erste Teilgebiet (364) zwischen dem Ende (367) des zweiten Teilgebiets (366) und der aufgeklebten Komponente (50) vor Erreichen der aufgeklebten Komponente (50) endet.

13. Anordnung nach einem der Ansprüche 2 bis 12, **dadurch gekennzeichnet, dass** das Zwischenelement (70) als eine Folie, insbesondere als eine Trennfolie, ausgebildet ist und/oder dass die mit dem Substrat (20) verklebte Komponente (50; 450) mit einem Laminat oder einer Laminatlage ausgebildet ist.

14. Verfahren zur Überprüfung einer Klebeanbindung, aufweisend die Schritte:
- Anordnen eines Substrats (20), einer mit dem Substrat (20) zu verklebenden Komponente (50; 450) und eines Klebefilms (30; 130; 230; 330) in der Weise, dass ein Abschnitt des Klebefilms (30; 130; 230; 330) zur Herstellung einer strukturellen Klebeverbindung (40; 440) zwischen dem Substrat (20) und der Komponente (50; 450) angeordnet wird und der Klebefilm (30; 130; 230; 330) sich mindestens über einen Teil (52) eines Randes (51) der Komponente (50; 450) hinaus erstreckt und einen Überstand (35; 135; 235; 335) bildet;
- Ausharten mindestens des Klebefilms (30; 130; 230; 330); und
- Schälendes Abziehen eines Prüfabschnitts (60; 160; 260; 360; 560; 660), der mit dem sich mindestens über den Teil (52) des Randes (51) der Komponente (50; 450) hinaus erstreckenden Überstand (35; 135; 235; 335) des Klebefilms (30; 130; 230; 330) ausgebildet ist, von dem Substrat (20).

## Claims

1. An adhesive film (30; 130; 230; 330) for a structural adhesive bond (40;440) to a substrate (20), the adhesive film (30; 130; 230; 330) having a structure which takes the form of a carrier structure of the adhesive film (30; 130; 230; 330), wherein the carrier structure is formed by a textile fabric; wherein the adhesive film (30; 130; 230; 330) comprises a curable adhesive, which includes an epoxy resin; and
wherein, at least in a subregion (133; 333; 333, 633) of the adhesive film (30; 130; 230; 330), a mechanical strength of the structure has been matched to a predefined target binding force of a bond (K) produced using the adhesive film (30; 130; 230; 330) such that, after completion of the bond (K), when the adhesive film (30; 130; 230; 330) is pulled away from the substrate or from a material layer (285; 385) with peeling stress on the bond (K) for verification of the adhesive attachment to the substrate (20) or to the material layer (285; 385), the adhesive film (30; 130; 230; 330) fails with exceedance of the mechanical strength of the structure when strength of the bond (K) attains or exceeds the target binding force, and the adhesive film (30; 130; 230; 330) when pulled apart does not fail at least in the subregion (133; 333; 333, 633) when strength of the bond (K) does not attain the target binding force;
**characterized in that** at least in a subarea (132; 332; 332, 632) of the adhesive film (130; 330), the structure has been formed with an additional reinforcing component (180; 380; 380, 681), where the additional reinforcing component (180; 380; 380, 681) has been applied to the starting adhesive film (131; 331) to form the adhesive film (130; 330) and wherein the additional reinforcing component (180; 380; 380, 681) is formed with a textile fabric, and wherein the mechanical strength matched to the target binding force is a mechanical strength of the structure including the additional reinforcing component (180; 380; 380, 681).

2. An arrangement (10; 110; 210; 310; 410; 510; 610) for verification of an adhesive attachment, having a substrate (20), a component (50; 450) bonded to the substrate (20) by an adhesive film (30; 130; 230; 330) to form a structural adhesive bond (40; 440), and at least one test section (60; 160; 260; 360; 560; 660);
where the test section (60; 160; 260; 360; 560; 660) is formed by a projection (35; 135; 235; 335) of the adhesive film (30; 130; 230; 330) that extends at least beyond a part (52) of an edge (51) of the component (50; 450) bonded to the substrate (20) and the projection (35; 135; 235; 335) is bonded to the substrate (20) in some regions, wherein a mechanical strength of the test section (60; 160; 260; 360; 560; 660) at least in a subregion (161; 261; 361) of the test section (60; 160; 260; 360; 560; 660) is matched to a predefined target binding force of a bond (K) produced using the adhesive film (30; 130; 230; 330) such that, after completion of the bond (K), when the test section (60; 160; 260; 360; 560; 660) is pulled away from the substrate (20) with peeling stress on the bond (K), the test section (60; 160; 260; 360; 560; 660) breaks off with exceedance of the mechanical strength thereof when strength of the bond (K) attains or exceeds the target binding force, and the test section (60; 160; 260; 360; 560; 660) when pulled apart does not break off at least in the subregion (161; 261; 361) when strength of the bond (K) does not attain the target binding force.

3. The arrangement according to claim 2, wherein the adhesive film (30; 130; 230; 330) has a structure and at least in the subregion (161; 261; 361) of the test section (60; 160; 260; 360; 560; 660) a mechanical strength of the structure is matched to the target binding force of the bond (K) produced using the adhesive film (30; 130; 230; 330) such that, when the test section (60; 160; 260; 360; 560; 660) is pulled off, the adhesive film (30; 130; 230; 330) fails with exceedance of the mechanical strength of the structure when strength of the bond (K) attains or exceeds the target binding force, and the adhesive film (30; 130; 230; 330) when pulled apart does not fail at least in the subregion (161; 261; 361) when strength of the bond (K) does not attain the target binding force.

4. The arrangement according to claim 2 or 3, **characterized in that** the arrangement (10; 110; 210; 310; 410; 510; 610) also has an intervening element (70) spaced apart from the edge (51) of the component (50; 450) bonded to the substrate (20), and the projection (35; 135; 235; 335) extends over regions of the intervening element (70) such that the intervening element (70) is in regions between the projection (35; 135; 235; 335) and the substrate (20), where the projection (35; 135; 235; 335) is bonded to the substrate (20) between the edge (51) of the component (50; 450) bonded to the substrate (20) and the intervening element (70), and where the projection (35; 135; 235; 335) is readily detachable from the intervening element (70).

5. The arrangement according to one of claims 2 to 4, **characterized in that** an additional reinforcing component (180; 380) is provided at least in a first subarea (164; 364) of the test section (160; 360; 660).

6. The arrangement according to claim 4, **characterized in that** an additional reinforcing component (180; 380) is provided at least in a first subarea (164; 364) of the test section (160; 360; 660); and
wherein the first subarea (164; 364) ends between the intervening element (70) and the component (50) bonded to the substrate (20) before reaching the component (50) bonded to the substrate (20); and/or
wherein the first subarea (164; 364) overlaps with at least sections of the intervening element (70) and extends across a section of an edge (71) of the intervening element (70) .

7. The arrangement according to one of claims 2 to 6, **characterized in that** an additional material layer (285; 385) with elevated breaking strength is disposed on the projection (235; 335) in a second subarea (266; 366) of the test section (260; 360) .

8. The arrangement according to claim 4, **characterized in that** an additional material layer (285; 385) with elevated breaking strength is disposed on the projection (235; 335) in a second subarea (266; 366) of the test section (260; 360) and the second subarea (266; 366) ends between the intervening element (70) and the component (50) bonded to the substrate (20) before reaching the component (50) bonded to the substrate (20), and in particular the second subarea (266; 366) overlaps with at least sections of the intervening element (70) and extends across a section of an edge (71) of the intervening element (70).

9. The arrangement according to claim 8, **characterized in that** an additional reinforcing component (180; 380) is provided at least in a first subarea (164; 364) of the test section (160; 360; 660).

10. The arrangement according to claim 6, **characterized in that** an additional material layer (285; 385) with elevated breaking strength is disposed on the projection (235; 335) in a second subarea (266; 366) of the test section (260; 360) and the second subarea (266; 366) ends between the intervening element (70) and the component (50) bonded to the substrate (20) before reaching the component (50) bonded to the substrate (20), and in particular the second subarea (266; 366) overlaps with at least sections of the intervening element (70) and extends across a section of an edge (71) of the intervening element (72).

11. The arrangement according to claim 5 or 6, **characterized in that** an additional material layer (285; 385) with elevated breaking strength is disposed on the projection (235; 335) in a second subarea (266; 366) of the test section (260; 360) and the first subarea (364) overlaps with at least sections of the second subarea (366), the first subarea (364) extends across an end (367) of the second subarea (366) and the first subarea (364) ends between the end (367) of the second subarea (366) and the bonded component (50) before reaching the bonded component (50).

12. The arrangement according to claim 9 or 10, **characterized in that** the first subarea (364) overlaps with at least sections of the second subarea (366), the first subarea (364) extends across an end (367) of the second subarea (366) and the first subarea (364) ends between the end (367) of the second subarea (366) and the bonded component (50) before reaching the bonded component (50)

13. The arrangement according to one of claims 2 to 12, **characterized in that** the intervening element (70) is formed of a film, in particular a release film, and/or wherein the component (50) bonded to the substrate (20) is formed with a laminate or a laminate ply.

14. A method of verifying an adhesive attachment, comprising the steps:
arranging a substrate (20), a component (50; 450) to be bonded to the substrate (20) and an adhesive film (30; 130; 230; 330) such that a section of the adhesive film (30; 130; 230; 330) is arranged between the substrate (20) and the component (50; 450) to establish a structural adhesive bond (40; 440) and the adhesive film (30; 130; 230; 330) extends over at least a part (52) of an edge (51) of the component (50; 450) and forms a projection (35; 135; 235; 335);
curing at least the adhesive film (30; 130; 230; 330); and
peeling off a test section (60; 160; 260; 360; 560; 660) formed by the projection (35; 135; 235; 335) of the adhesive film (30; 130; 230; 330) that extends at least across the part of the edge (51) of the component (50; 450) from the substrate (20) .

## Revendications

1. Film adhésif (30 ; 130 ; 230 ; 330) pour une liaison adhésive structurelle (40 ; 440) avec un substrat (20), le film adhésif (30 ; 130 ; 230 ; 330) présentant une structure, qui est configurée sous la forme d'une structure de support du film adhésif (30 ; 130 ; 230 ; 330), la structure de support étant formée avec une structure textile ;
le film adhésif (30 ; 130 ; 230 ; 330) présentant un agent adhésif durcissable, qui contient une résine époxyde ; et
au moins dans une zone partielle (133 ; 333 ; 333, 633) du film adhésif (30 ; 130 ; 230 ; 330), une résistance mécanique de la structure étant adaptée à une force de liaison de consigne prédéfinie d'un collage (K) produit en utilisant le film adhésif (30 ; 130 ; 230 ; 330) de telle sorte qu'après l'achèvement du collage (K), lors d'un décollement du film adhésif (30 ; 130 ; 230 ; 330) du substrat (20) ou d'une couche de matériau (285 ; 385) avec une sollicitation par pelage du collage (K), pour le contrôle de la liaison adhésive au substrat (20) ou à la couche de matériau (285 ; 385), le film adhésif (30 ; 130 ; 230 ; 330) fait défaillance en dépassant la résistance mécanique de la structure lorsque la capacité de charge du collage (K) atteint ou dépasse la force de liaison de consigne, et le film adhésif (30 ; 130 ; 230 ; 330) ne fait pas défaillance lors du décollement au moins dans la zone partielle (133 ; 333 ; 333, 633) lorsque la capacité de charge du collage (K) n'atteint pas la force de liaison de consigne ;
**caractérisé en ce qu'**au moins dans une région partielle (132 ; 332 ; 332, 632) du film adhésif (130 ; 330), la structure est configurée avec un composant de renforcement supplémentaire (180 ; 380 ; 380, 681), le composant de renforcement supplémentaire (180 ; 380 ; 380, 681) étant introduit dans le film adhésif initial (131 ; 331) pour former le film adhésif (130 ; 330), et le composant de renforcement supplémentaire (180 ; 380 ; 380, 681) étant configuré avec une structure textile, et **en ce que** la résistance mécanique adaptée à la force de liaison de consigne est une résistance mécanique de la structure incluant le composant de renforcement supplémentaire (180 ; 380 ; 380, 681).

2. Agencement (10 ; 110 ; 210 ; 310 ; 410 ; 510 ; 610) pour le contrôle d'une liaison adhésive, comprenant un substrat (20), un composant (50 ; 450) collé au substrat (20) au moyen d'un film adhésif (30 ; 130 ; 230 ; 330) pour former une liaison adhésive structurelle (40 ; 440), et au moins une section de contrôle (60 ; 160 ; 260 ; 360 ; 560 ; 660) ;
la section de contrôle (60 ; 160 ; 260 ; 360 ; 560 ; 660) étant configurée avec une saillie (35 ; 135 ; 235 ; 335) du film adhésif (30 ; 130 ; 230 ; 330) s'étendant au moins au-delà d'une partie (52) d'un bord (51) du composant (50 ; 450) collé au substrat (20), et la saillie (35 ; 135 ; 235 ; 335) étant collée par zones au substrat (20) ;
une résistance mécanique de la section de contrôle (60 ; 160 ; 260 ; 360 ; 560 ; 660) étant adaptée, au moins dans une zone partielle (161 ; 261 ; 361) de la section de contrôle (60 ; 160 ; 260 ; 360 ; 560 ; 660), à une force de liaison de consigne prédéfinie d'un collage (K) produit en utilisant le film adhésif (30 ; 130 ; 230 ; 330) de telle sorte qu'après l'achèvement du collage (K), lors d'un décollement de la section de contrôle (60 ; 160 ; 260 ; 360 ; 560 ; 660) du substrat (20) avec une sollicitation par pelage du collage (K), la section de contrôle (60 ; 160 ; 260 ; 360 ; 560 ; 660) se rompt en dépassant sa résistance mécanique lorsque la capacité de charge du collage (K) atteint ou dépasse la force de liaison de consigne, et la section de contrôle (60 ; 160 ; 260 ; 360 ; 560 ; 660) ne se rompt pas lors du décollement au moins dans la zone partielle (161 ; 261 ; 361) lorsque la capacité de charge du collage (K) n'atteint pas la force de liaison de consigne.

3. Agencement selon la revendication 2, le film adhésif (30 ; 130 ; 230 ; 330) présentant une structure et, au moins dans la zone partielle (161 ; 261 ; 361) de la section de contrôle (60 ; 160 ; 260 ; 360 ; 560 ; 660), une résistance mécanique de la structure étant adaptée à la force de liaison de consigne du collage (K) produit en utilisant le film adhésif (30 ; 130 ; 230 ; 330) de telle sorte que, lors du décollement de la section de contrôle (60 ; 160 ; 260 ; 360 ; 560 ; 660), le film adhésif (30 ; 130 ; 230 ; 330) fait défaillance en dépassant la résistance mécanique de la structure lorsque la capacité de charge du collage (K) atteint ou dépasse la force de liaison de consigne, et le film adhésif (30 ; 130 ; 230 ; 330) ne fait pas défaillance pas lors du décollement au moins dans la zone partielle (161 ; 261 ; 361) lorsque la capacité de charge du collage (K) n'atteint pas la force de liaison de consigne.

4. Agencement selon la revendication 2 ou 3, **caractérisé en ce que** l'agencement (10 ; 110 ; 210 ; 310 ; 410 ; 510 ; 610) présente en outre un élément intermédiaire (70), qui est agencé à distance du bord (51) du composant (50 ; 450) collé au substrat (20), et **en ce que** la saillie (35 ; 135 ; 235 ; 335) s'étend en zones au-dessus de l'élément intermédiaire (70) de telle sorte que l'élément intermédiaire (70) se trouve en zones entre la saillie (35 ; 135 ; 235 ; 335) et le substrat (20), la saillie (35 ; 135 ; 235 ; 335) étant collée au substrat (20) entre le bord (51) du composant (50 ; 450) collé au substrat (20) et l'élément intermédiaire (70), et de préférence la saillie (35 ; 135 ; 235 ; 335) étant facilement détachable de l'élément intermédiaire (70).

5. Dispositif selon l'une quelconque des revendications 2 à 4, **caractérisé en ce qu'**un composant de renforcement supplémentaire (180 ; 380) est prévu au moins dans une première région partielle (164 ; 364) de la section de contrôle (160 ; 360 ; 660).

6. Agencement selon la revendication 4, **caractérisé en ce qu'**un composant de renforcement supplémentaire (180 ; 380) est prévu au moins dans une première région partielle (164 ; 364) de la section de contrôle (160 ; 360 ; 660) ; et **en ce que**
la première région partielle (164 ; 364) se termine entre l'élément intermédiaire (70) et le composant (50) collé au substrat (20) avant d'atteindre le composant (50) collé au substrat (20) et/ou
la première région partielle (164) chevauche au moins par sections l'élément intermédiaire (70) et s'étend au-delà d'une section d'un bord (71) de l'élément intermédiaire (70) .

7. Agencement selon l'une quelconque des revendications 2 à 6, **caractérisé en ce que**, dans une deuxième région partielle (266 ; 366) de la section de contrôle (260 ; 360), une couche de matériau supplémentaire (285 ; 385) ayant une résistance au déchirement accrue est agencée sur la saillie (235 ; 335) .

8. Agencement selon la revendication 4, **caractérisé en ce que**, dans une deuxième région partielle (266 ; 366) de la section de contrôle (260 ; 360), une couche de matériau supplémentaire (285 ; 385) ayant une résistance au déchirement accrue est agencée sur la saillie (235 ; 335) et **en ce que** la deuxième région partielle (266 ; 366) se termine entre l'élément intermédiaire (70) et le composant (50) collé au substrat (20) avant d'atteindre le composant (50) collé au substrat (20), et notamment **en ce que** la deuxième région partielle (266 ; 366) chevauche au moins par sections l'élément intermédiaire (70) et s'étend au-delà d'une section d'un bord (71) de l'élément intermédiaire (72).

9. Agencement selon la revendication 8, **caractérisé en ce qu'**un composant de renforcement supplémentaire (180 ; 380) est prévu au moins dans une première région partielle (164 ; 364) de la section de contrôle (160 ; 360 ; 660).

10. Agencement selon la revendication 6, **caractérisé en ce que**, dans une deuxième région partielle (266 ; 366) de la section de contrôle (260 ; 360), une couche de matériau supplémentaire (285 ; 385) ayant une résistance au déchirement accrue est agencée sur la saillie (235 ; 335) et **en ce que** la deuxième région partielle (266 ; 366) se termine entre l'élément intermédiaire (70) et le composant (50) collé au substrat (20) avant d'atteindre le composant (50) collé au substrat (20), et notamment **en ce que** la deuxième région partielle (266 ; 366) chevauche au moins par sections l'élément intermédiaire (70) et s'étend au-delà d'une section d'un bord (71) de l'élément intermédiaire (72).

11. Agencement selon la revendication 5 ou 6, **caractérisé en ce que**, dans une deuxième région partielle (266 ; 366) de la section de contrôle (260 ; 360), une couche de matériau supplémentaire (285 ; 385) ayant une résistance au déchirement accrue est agencée sur la saillie (235 ; 335), et **en ce que** la première région partielle (364) chevauche par sections la deuxième région partielle (366), la première région partielle (364) s'étend au-delà d'une extrémité (367) de la deuxième région partielle (366), et la première région partielle (364) se termine entre l'extrémité (367) de la deuxième région partielle (366) et le composant collé (50) avant d'atteindre le composant collé (50).

12. Agencement selon la revendication 9 ou 10, **caractérisé en ce que** la première région partielle (364) chevauche par sections la deuxième région partielle (366), la première région partielle (364) s'étend au-delà d'une extrémité (367) de la deuxième région partielle (366), et la première région partielle (364) se termine entre l'extrémité (367) de la deuxième région partielle (366) et le composant collé (50) avant d'atteindre le composant collé (50).

13. Agencement selon l'une quelconque des revendications 2 à 12, **caractérisé en ce que** l'élément intermédiaire (70) est configuré sous la forme d'un film, notamment sous la forme d'un film de séparation, et/ou **en ce que** le composant (50 ; 450) collé au substrat (20) est configuré avec un stratifié ou une couche de stratifié.

14. Procédé pour le contrôle d'une liaison adhésive, comprenant les étapes suivantes :
- l'agencement d'un substrat (20), d'un composant (50 ; 450) à coller au substrat (20) et d'un film adhésif (30 ; 130 ; 230 ; 330) de telle sorte qu'une section du film adhésif (30 ; 130 ; 230 ; 330) est agencée pour établir une liaison adhésive structurelle (40 ; 440) entre le substrat (20) et le composant (50 ; 450), et le film adhésif (30 ; 130 ; 230 ; 330) s'étend au moins au-delà d'une partie (52) d'un bord (51) du composant (50 ; 450) et forme une saillie (35 ; 135 ; 235 ; 335) ;
- le durcissement au moins du film adhésif (30 ; 130 ; 230 ; 330) ; et
- le décollement par pelage d'une section de contrôle (60 ; 160 ; 260 ; 360 ; 560 ; 660), qui est formée avec la saillie (35 ; 135 ; 235 ; 335) du film adhésif (30 ; 130 ; 230 ; 330) s'étendant au moins au-delà de la partie (52) du bord (51) du composant (50 ; 450), du substrat (20) .
